# EUROPÄISCHE PATENTSCHRIFT

(11) **EP 3 589 916 B1**
(45) Veröffentlichungstag und Bekanntmachung des Hinweises auf die Patenterteilung: **02.08.2023**
(21) Anmeldenummer: 18708969.3
(22) Anmeldetag: 01.03.2018
(51) Int. Cl.: G01B 5/04, G01B 7/02, G01B 11/04, G01B 21/02, G01B 21/06, H02G 1/00, H01B 7/36, H02G 3/00

(54) **VORRICHTUNG UND VERFAHREN ZUR LEITUNGSLÄNGENBESTIMMUNG**
DEVICE AND METHOD FOR DETERMINING THE LENGTH OF A LINE
DISPOSITIF ET PROCÉDÉ DE DÉTERMINATION DE LA LONGUEUR DE LIGNES

(30) Priorität: 03.03.2017 DE 102017203552; 24.11.2017 DE 102017127792
(43) Veröffentlichungstag der Anmeldung: 08.01.2020
(73) Patentinhaber: Hanzel, Sven, 37242 Bad Sooden-Allendorf (DE)
(72) Erfinder: Hanzel, Sven, 37242 Bad Sooden-Allendorf (DE)
(74) Vertreter: Dantz, Jan Henning
(86) Internationale Anmeldenummer: PCT/EP2018/055026
(87) Internationale Veröffentlichungsnummer: WO 2018/158359

(56) Entgegenhaltungen:
- EP-A2- 1 630 826
- WO-A1-98/47209
- WO-A1-2017/005282
- DE-A1- 19 814 540
- DE-A1- 19 939 638
- DE-A1-102009 015 263
- DE-U1-202016 102 194
- JP-A- H08 327 345
- US-A- 4 581 796
- US-A- 5 594 980

## Beschreibung

Die Erfindung bezieht sich auf ein Verfahren zur Leitungslängenbestimmung wenigstens einer elektrischen Leitung, auf eine Vorrichtung zur Leitungslängenbestimmung wenigstens einer elektrischen Leitung, sowie eine elektrische Leitung mit einer Kennzeichnung.

Bei der Herstellung von industriellen Anlagen, wie beispielsweise Gebäuden, Kraftwerken, Sondermaschinen, Klärwerken oder dergleichen, muss eine Vielzahl von Geräten fachgerecht elektrisch miteinander verbunden werden, um eine zuverlässige Bedienung, Überwachung und/oder Steuerung der Anlage zu ermöglichen. Hierzu werden, bspw. in einem oder mehreren Schaltschränken, entsprechende Geräte installiert, die miteinander über elektrische Leitungen zu verbinden sind.

Es sind Vorrichtungen zur Leitungslängenbestimmung aus der DE 44 00 824 A1, der DE 198 14 540 A1, WO 2015/142 151 A1, der DE 199 39 638 A1, der DE 102 48 411 A1, der WO 98/472 09 A1 und der DE 198 31 090 A1 bekannt.

Die DE 10 2009 015 263 A1 offenbart ein Zuschnittsverfahren eines optischen Kabels. Weiterhin ist eine Zahlenangabe auf dem Kabel neben der Kabelkennzeichnung als Längenangabe vorgesehen.

Die DE 20 2016 102 194 U1 offenbart ein Verfahren zur Längenbestimmung eines elektrischen Leiters. Bei diesem Verfahren erfolgt eine Längenbestimmung durch Messgerät, welches von der Mitte der Kabeltrommel abgeht. Das Messgerät wirkt mit einer Ablängvorrichtung, z.B. einer Kabelschere, zusammen. Diese stellt beim Abschneiden kurzzeitig einen Kontakt bei einem zweiadrigen Kabel her und ermöglicht dadurch die Längenbestimmung durch das Messgerät.

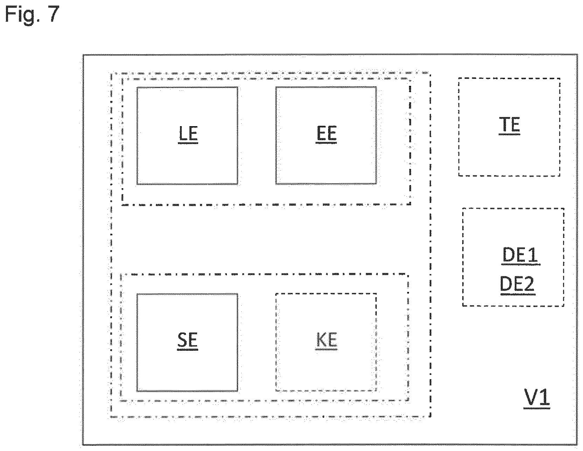

Die DE 199 39 638 A1 offenbart die Längenangaben eine Skalierung und daher nicht Teil des Barcodes, z.B. Fig. 7, ist. Ein Schätzen der Kabellänge ist aufgrund der Skalierung möglich.

Die EP 1 630 826 A2 offenbart ebenfalls eine getrennte Skalierung und einen Barcode.

Die WO 98/47209 A1 offenbart das Abisolieren eines Kabels mit mindestens einer Messervorrichtung. Die WO 98/47209 A1 beschreibt eine Möglichkeit zum Ermitteln eines Leitungsdurchmessers und einer Leitungslänge.

Die US 5 594 980 A und die US 5 581 796 A sind größere Anlagen, aus welche zugeschnittene Kabel aus einer Endloslänge (z.B. einer Kabeltrommel) gewonnen werden.

Dabei wird in einem Großteil der vorgenannten Vorrichtungen nicht von einem Satz aus mehreren teilweise vorkonfektionierten Leitungen ausgegangen, sondern von einer Kabeltrommel.

Als Erstes erfolgt typischerweise oftmals ein "Geradeschneiden" des Kabelanfangs.

Dabei wird, wie z.B. in der WO 98/47209 A1 (Spalte 9 Zeile 20-23) das Vorhandensein eines Kabels durch eine Lichtschranke detektiert, allerdings wird diese Lichtschranke nicht zur Ermittlung eines Startmesspunktes zur Längenbestimmung benutzt, sondern der Messpunkt wird durch ein erstes anfängliches Ablängen erreicht bzw. gesetzt.

Die WO 2015/142 151 A1 offenbart ein Messen und Zuschneiden eines Kabels von einer Kabeltrommel.

Entsprechend einem Stromlaufplan und eines Schaltschranklayouts werden ein oder mehrere individuell konfektionierte elektrische Leitungen, bspw. in Form eines oder mehrere Kabel oder Kabelbäume, an einen oder mehrere Anschlüsse der Geräte, bspw. in Form von Klemmen, montiert. Je nach Einsatzzweck wird die Art der elektrischen Leitung entsprechend den Anforderungen ausgewählt. Dies kann beispielsweise ein Kupfer-oder ein Glasfaserkabel, ein isoliertes Kabel, und/oder ein ein-oder mehrlitziges Kabel sein. Der Querschnitt der Leitung kann dabei entsprechend der zu erwartenden Stromstärke dimensioniert werden. Damit keine überflüssigen elektrischen Leitungen in der elektrischen Montageanordnung, bspw. im Schaltschrank, verbleiben, wird die Länge der jeweiligen elektrischen Leitung der Einbausituation angepasst. Auch der gezielte Einsatz von Farben wird nach den Steuer-und Regelungstechnischen Gesetzmäßigkeiten vorgenommen und erhöht die Übersichtlichkeit in der elektrischen Montageanordnung, wie bspw. einem Schaltschrank. Je nach Einsatzzweck können wahlweise einzelne elektrische Leitungen und/oder vorbereitete Leitungssätze, wie bspw. ein oder mehrere Kabelbäume, an einem Gerät angeschlossen werden, um die entsprechende Anschlüsse dieses Gerätes mit jeweiligen Anschlüssen anderer Geräte verbinden. Die Verkabelung wird häufig als Punkt-zu-Punkt Direktverkabelung mittels Anschlusskabeln, welche jeweils zwischen zwei Anschlüssen elektrischer Geräte verlegt werden, ausgeführt. Dabei ist die Verdrahtung und Verkabelung eine äußerst fehleranfällige Tätigkeit und allein aufgrund der gro-βen Anzahl der Kabel ist es sehr schwierig, dabei den Überblick zu behalten. Zudem ist die Arbeit an einem Schalt- oder Verteilerschrank sehr eintönig, wodurch ebenfalls die Fehlerwahrscheinlichkeit erhöht wird.

Eine Kennzeichnung einzelner Leitungen erfolgt häufig manuell und bedarf einer sehr genauen Dokumentation, welche wiederum für spätere Arbeiten verständlich und eindeutig sein muss. In einer Anlagenverdrahtung oder in einer Gebäudeinstallation wird dies zudem erschwert durch eine teils kryptische Namensgebung der Bezeichnungen von Kabeln und elektrischen Geräten. An dieser Stelle treffen die verschiedenen Gewerke des Anlagenbaus und der elektrischen Ausstattung aufeinander und eine eindeutige Dokumentation wird durch die hier erforderliche Abstimmung zusätzlich erschwert.

Zusätzlich zur aufwendigen Dokumentation der Verkabelung in Schaltplänen ist eine korrekte Kennzeichnung der Kabel, insbesondere der Kabelenden, und Anschlüsse oder Anschlussklemmen erforderlich. Dazu werden häufig Kabel durch Beschriftungsfähnchen und Anschlussklemmen durch Beschriftungsaufkleber markiert. Im Schaltplan ist entsprechend dokumentiert, welches Kabelende an welcher Anschlussklemme angeschlossen ist. Bei der erstmaligen Erstellung einer Verkabelung existiert meist im Vorhinein ein Schaltplan, an welchen sich der Installateur halten muss.

Zur Erleichterung der Handhabung bei der Verlegung des Anschlusskabels wird bei der Vorkonfektionierung auf den Mantel der Leitung eine Kennzeichnung mittels Tintenstrahldruck aufgebracht, oder mittels eines Kennzeichnungsträgers wie beispielsweise eines Aufklebers oder Schildchens an der Leitung befestigt. Die Kennung ist dabei so beschaffen, dass sie im Rahmen der Anlagenverdrahtung, die eine Mehrzahl von vorkonfektionierten Leitungen aufweist, eindeutig ist, sodass keine weitere gleiche Kennung in der elektrischen Montageanordnung existiert. Bei der Vorkonfektionierung der Anschlusskabel wird von einem Kabelvorrat, der beispielsweise auf eine Kabelrolle aufgewickelt ist, ein für das jeweilige Anschlusskabel benötigter Längenabschnitt abgetrennt. Bereits zu diesem Zeitpunkt werden die Informationen über die Länge der zu konfektionierenden Leitung und die in der Kennzeichnung enthaltenen Informationen bereitgestellt. Noch in der Vorkonfektionierung werden die Kennzeichnungen an der Leitung angebracht. Die in den Kennzeichnungen enthaltene Information umfasst die Kennung der Anschlüsse elektrischer Geräte, an welche die Leitung in der elektrischen Montageanordnung anzuschließen ist, den Trassenverlauf der Leitung, des Kabeltyps und/oder der Aderposition an einem Steckverbinder. Durch die bekannte Vorkonfektionierung von Anschlusskabeln wird zwar deren Handhabung bei der Verdrahtung erleichtert, sie hat jedoch den Nachteil, dass die Vorkonfektionierung in einer gesonderten Vorkonfektionierungslinie durchgeführt werden muss, für die Beschriftung der Kabel eine Vielfalt an Informationen bereitgestellt werden muss und dass eine Logistik erforderlich ist, damit an einem Montageort genau das richtige, vorkonfektionierte Anschlusskabel bereitgestellt wird, welches für die dortige Verdrahtung vorgesehen und korrekt beschriftet ist.

Der Erfindung liegt daher die Aufgabe zugrunde, die Konfektionierung wenigstens einer elektrischen Leitung zu erleichtern, insbesondere die Erstellung und Präzisierung von Längen zum Zwecke einer Konfektionierung von elektrischen Leitungen zu erleichtern.

Es ist ferner eine Aufgabe der Erfindung einen Verdrahtungsvorgang, der bspw. eine Zuordnung der eventuell vor Ort zu konfektionierenden Leitungen zu Anschlüssen elektrischer Geräte, zu erleichtern.

Die Aufgabe wird durch ein Verfahren zur Leitungslängenbestimmung gemäß Anspruch 1, sowie eine Vorrichtung zur Leitungslängenbestimmung gemäß Anspruch 10, gelöst.

Hinsichtlich des Verfahrens wird die Aufgabe durch ein Verfahren gelöst zur Leitungslängenbestimmung, wobei das Verfahren inter alia die Schritte umfasst:
Bestimmung, insbesondere messtechnisches Erfassen, einer Länge einer ersten abgelängten elektrischen Leitung; Bestimmung, insbesondere Auslesen, einer Kennung der ersten abgelängten elektrischen Leitung; und Bestimmung, insbesondere Berechnen, einer Länge einer zweiten elektrischen Leitung, die zur Installation in einer elektrischen Montageanordnung bestimmt ist, anhand der Länge der ersten abgelängten elektrischen Leitung und einer vermittels der Kennung bestimmten Ausgangslänge.

Im Unterschied zur WO 2015/142 151 A1 erfolgt lediglich ein einseitiges Ablängen, wobei die Längenmessvorrichtung lediglich zur Längenbestimmung der abgetrennten überschüssigen Kabelenden, welche eigentlich als Abfall betrachtet werden, genutzt wird. Derartige Kabelenden treten beim üblichen Ablängen von einer Kabeltrommel gar nicht auf.

Vorteilhafte Ausgestaltungsvarianten des Verfahrens sind Gegenstand der Unteransprüche.

Anhand der Kennung kann vorteilhaft die erste elektrische Leitung identifiziert werden und anhand dieser Identifizierung kann die Ausgangslänge bestimmt werden.

Die Ausgangslänge bezieht sich auf eine elektrische Leitung vor deren Trennung in die erste Leitung und die zweite Leitung.

Das Verfahren kann ferner vorteilhaft einen oder mehrere der folgenden Schritte umfassen:
Ablängen wenigstens einer elektrischen Leitung auf eine Ausgangslänge, und/oder Zuordnen einer Kennung zu der Ausgangslänge, und/oder Speichern der Ausgangslänge und einer zugeordneten Kennung. Dies kann vorzugsweise werksseitig bei der Vorbereitung bzw. Vorkonfektionierung der Verdrahtungssatzes, bzw. eines Kabelbündels, erfolgen.

Weiterhin kann das Verfahren den folgenden Schritt umfassen:
Kennzeichnen einer elektrischen Leitung mit einer der Kennung entsprechenden Kennzeichnung, welche Kennzeichnung vorzugsweise an der Oberfläche oder vorzugsweise auf der Oberfläche der Leitung angebracht wird. Die Leitung mit der Ausgangslänge und der Kennzeichnung kann teilweise vorkonfektioniert als Einzelleitung oder als bevorzugt mit mehreren weiteren teilweise teilkonfektionierten Leitungen als Kabelbündel bzw. Verdrahtungssatz dem Werker zur Verkabelung einer elektrischen Montageanordnung, z.B. eines Schaltschranks oder einer Schaltschrankpartition, zur Verfügung gestellt werden.

Das Verfahren kann ferner den folgenden Schritt umfassen:
Ablängen der elektrischen Leitung zur Verkabelung der elektrischen Montageanordnung, wobei eine erste, überschüssige elektrische Leitung anfällt und wobei eine zweite, zur Verwendung in der elektrischen Montageanordnung bestimmte elektrische Leitung anfällt.

Das Verfahren kann zudem vorteilhaft zumindest einen der folgenden Schritte umfassen:
Erfassen der Kennzeichnung der ersten Leitung, vorzugsweise vermittels einer Bilderkennung z.B. durch eine Kamera, und
Ermitteln einer Kennung anhand der erfassten Kennzeichnung.

In einem Schritt Schritt wird auch das Bestimmen einer Gesamtlänge der ersten Leitung erfolgen. Hierzu wird u.a. der Leiteranfang messtechnisch, z.B. durch eine Lichtschranke, erfasst.

Weiterhin erfindungsgemäß ist ein Verfahren zum Herstellen eines ersten Verdrahtungssatzes von elektrischen Leitungen, die jeweils mit wenigstens einer Kennzeichnung versehen sind, welchen Kennzeichnungen, bspw. anhand einer vermittels der Kennzeichnung ermittelbaren Kennung, jeweils eine Ausgangslänge zuordenbar ist und Durchführen des vorgenannten erfindungsgemäßen Verfahrens für jede der elektrischen Leitungen des Verdrahtungssatzes.

Das vorgenannte Verfahren kann zudem auch in einem erfindungsgemäßen Verfahren zur Herstellung eines zweiten Verdrahtungssatzes von elektrischen Leitungen angewandt werden, wobei der erste Verdrahtungssatz von elektrischen Leitungen nach dem vorgenannten Verfahren hergestellt wird und wobei der erste Verdrahtungssatz für einen ersten Schaltschrank und der zweite Verdrahtungssatz für einen zweiten Schaltschrank bestimmt sind, wobei bei der Herstellung des zweiten Verdrahtungssatzes ein schaltschrankspezifischer Plan und/oder eine schaltschrankspezifische Dokumentation des ersten Schaltschranks mit einem schaltschrankspezifischen Plan und/oder einer schaltschrankspezifischen Dokumentation des zweiten Schaltschrankes verglichen werden und die Leitungen des zweiten Verdrahtungssatzes, welche sowohl im ersten als auch im zweiten Schaltschrank identisch realisiert sind, vollständig vorkonfektioniert, also auf die korrekte Länge abgelängt und endständig an beiden Enden mit Leitungsverbindern versehen, werden.

Vorteilhaft können die Leitungen, welche nicht identisch realisiert sind, im zweiten Verdrahtungssatz mit einer Ausgangslänge und teilweise vorkonfektioniert enthalten sein oder entfallen.

Hinsichtlich der nicht beanspruchten elektrischen Leitung wird die Aufgabe durch eine elektrische Leitung gelöst, wobei an der elektrischen Leitung eine Kennzeichnung angebracht ist, vermittels welcher Kennzeichnung eine Länge einer zweiten elektrischen Leitung, die zur Installation in der elektrischen Montageanordnung bestimmt ist, anhand der Länge der elektrischen Leitung und einer vermittels der Kennung bestimmten Ausgangslänge bestimmbar ist.

Anhand der Kennzeichnung der Leitung wird ein Leitungstyp, insbesondere eineindeutig, bspw. anhand einer vermittels der Kennzeichnung ermittelbaren Kennung, bestimmt.

Bei der Kennzeichnung auf der Oberfläche kann es sich vorteilhaft um einen, vorzugsweise codierten, Zeichensatz handeln, der vermittels einer Schrifterkennung lesbar ist. Alternativ oder zusätzlich können die Zeichen des Zeichensatzes derart ausgebildet sein, dass sie auf der gekrümmten Oberfläche der Leitung unterscheidbar sind.

Hinsichtlich der Vorrichtung wird die Aufgabe durch eine Vorrichtung zur Leitungslängenbestimmung gelöst, wobei die Vorrichtung eine Erkennungseinheit umfasst, die dazu dient, eine Kennung einer ersten elektrischen Leitung zu bestimmen, wobei die Vorrichtung ferner eine Längenmesseinheit, die dazu dient, eine Länge der ersten Leitung zu bestimmen, und wobei die Vorrichtung eine Speichereinheit umfasst, die operativ mit der Erkennungseinheit und der Längenmesseinheit verbunden ist, und die dazu dient, die Kennung und die Länge der ersten Leitung zu erfassen, insbesondere einander zuzuordnen.

Wichtig ist in diesem Kontext dass die Vorrichtung eine erste Detektionseinheit umfasst, welche vorzugsweise eine Lichtschranke umfassen kann, die dazu dient, das Einführen der ersten Leitung in die Vorrichtung zu bestimmen

Zusätzlich kann die erste Detektionseinheit dazu dienen, einen Bezugspunkt für die Längenmessung zu bestimmen.

Die erste Detektionseinheit dient insbesondere zur Detektion eines Leitungsanfangs.

Während typische Kabelablängvorrichtungen nach der Einführung des Kabels in die Vorrichtung ein Kabel zuschneiden und anschließend das Ablängen durch einen sogenannten Inkrementgeber erfolgt. Dabei ist diese bekannte Technologie nicht auf eine Detektion des Leitungsanfangs durch das Vorgeben des Leitungsanfangs durch das Zuschneiden nicht angewiesen. Zugleich kann eine Zuschneidevorrichtung bei der vorliegenden erfindungsgemäßen Vorrichtung vorteilhaft entfallen. Eine teilweise Vorkonfektionierung von Leitungen als Arbeitsersparnis kann auf diese Weise durch den Stand der Technik nicht sinnvoll realisiert werden.

Die erfindungsgemäße Vorrichtung weist eine zweite Detektionseinheit zur Detektion eines Leitungsendes auf.

Da die Vorrichtung zudem eine Transporteinheit zum Transport der Leitung durch die Vorrichtung aufweist, ist es notwendig, dass die Transporteinrichtung nach der Längenmessung gestoppt wird. Hierfür kann ein zweites Sensorelement zur Detektion des Leitungsendes vorgesehen sein, welche vorzugsweise zur Steuerung der Transporteinheit dient.

Die vorgenannte erste und/oder zweite Detektionseinheit kann jeweils als optische Sensoren, insbesondere als Lichtschranken, ausgebildet sein. Sie weisen in an sich bekannter Bauweise einen Sender zur Emission eines Lichtstrahls und einen Empfänger zur Detektion des Lichtstrahls auf.

Die Vorrichtung kann eine Leitungsfördereinheit zum Transport von Leitungen mit unterschiedlichen Leiterdurchmessern aufweisen, wobei die Leitungsfördereinheit Laufbahnen mit unterschiedlicher Rillentiefe und/oder Rillenbreite aufweist, wobei die Zuleitung der Leitung auf die Laufbahnen in Abhängigkeit von einem ermittelten Leiterdurchmesser und/oder einer davon abhängigen Größe erfolgt.

Die Vorrichtung kann zudem eine Zuführvorrichtung zur Einführung und zum Transport von Leitungen mit unterschiedlichen Leiterdurchmessern bzw. Kabeldurchmesser aufweisen. Die Zuführung kann vorzugsweise entweder durch Umleiten der Leitung oder durch axiales Bewegen einer Transportrolle und/oder mehrerer Transportrollen erfolgen.

Alternativ kann auch eine der Transportrolle gegenüberliegende Lagerrolle oder mehrere Lagerrollen mit entsprechenden Laufbahnen ausgestattet sein oder es können mehrere Lagerrollen mit jeweils einer Laufbahn angeordnet sein.

Die Transporteinheit und die Längenmesseinheit können vorteilhaft auch in einer einzigen Transportrolle realisiert werden, welches zugleich auch als Zählrad ausgebildet sein kann. Alternativ kann auch das Lagerrad als Zählrad ausgebildet sein.

Der Transport der Leitung in der Vorrichtung selbst kann vorteilhaft durch Verklemmen der Leitung zwischen der Längenmesseinheit, hier kann ebenfalls ein Inkrementgeber, auch Zählrad genannt, eingesetzt werden und der Transporteinrichtung, insbesondere der Transportrolle, erfolgen. Durch das Verklemmen und die Bewegung der Transportrolle erfolgt vorteilhaft der Transport der Leitung innerhalb der Vorrichtung.

Dabei kann die Transportrolle und/oder die Lagerrolle schräg, insbesondere senkrecht, zur Vorschubrichtung der Leitung verschiebbar sein, um Leitungen mit größerem Querschnitt aufzunehmen.

Weitere vorteilhafte Ausgestaltungen der erfindungsgemäßen Vorrichtung werden nachfolgend näher erläutert.

Vorteilhaft dient die Kennung dazu, einen Leitungstyp aus einer Vielzahl von Leitungstypen elektrischer Leitungen zu bestimmen, wobei es sich bei den L Leitungstypen um verschiedene zur Verkabelung der elektrischen Montageanordnung vorgesehene elektrische Leitungen handelt.

Die Speichereinheit kann vorteilhaft dazu dienen, die Länge und die Kennung, bspw. eine Bezeichnung, wie bspw. Start- und/oder Zielanschlussbezeichnung, als Datenpaar zu speichern.

Vorteilhaft dient die Erkennungseinheit dazu, die Kennung anhand einer Kennzeichnung der ersten Leitung, mit der die erste Leitung gekennzeichnet ist, insbesondere eineindeutig identifizierbar ist, zu bestimmen.

Alternativ oder zusätzlich kann die Erkennungseinheit zur Bestimmung der Kennung bzw. des Leitungstyps eine Kennzeichnung der ersten Leitung vorgesehen sein, vorzugsweise durch optische Erfassen. Alternativ oder optional kann die erfasste Kennung auch einem Leitungstyp zugeordnet werden.

Die Vorrichtung kann ferner eine Leitungsförderungseinheit umfassen, die dazu dient, die erste Leitung entlang einer ersten Messstrecke für die Bestimmung der Kennung mittels der Erkennungseinheit zu führen und/oder sie kann dazu dienen, die erste Leitung entlang einer zweiten Messtrecke für die Bestimmung der Länge der ersten Leitung zu führen.

Die Vorrichtung kann ferner vorteilhaft eine Kommunikationseinheit umfassen, welche vorzugsweise mit der Speichereinheit operativ verbunden ist, und die dazu dient, die Kennung bzw. den Leitungstyp und die Länge der ersten Leitung, insbesondere an eine Ablängeinheit, zu übertragen.

Die Vorrichtung kann zudem ein, vorzugsweise handhaltbares, Gehäuse umfassen, in welchem die Erkennungseinheit, die Längenmesseinheit, die Speichereinheit, die Kommunikationseinheit und/oder die Leitungsförderungseinheit angeordnet sind.

In der Speichereinheit kann zudem eine der Kennung und/oder dem Leitungstyp zugeordnete Ausgangslänge der ersten Leitung z.B. als Datensatz hinterlegt sein, wobei die Ausgangslänge der Länge einer elektrischen Leitung vor einem Ablängschritt entspricht, bei welchem Ablängschritt die erste Leitung und eine zweite, zur Verwendung in der elektrischen Montageanordnung bestimmte Leitung anfallen.

Alternativ oder zusätzlich kann die Speichereinheit auch dazu dienen, anhand der Länge der ersten Leitung und einer Ausgangslänge eine Konfektionslänge, vorzugsweise durch Differenzbildung zwischen der Länge der ersten Leitung und der Ausgangslänge, zu bestimmen.

Als Bezugspunkt für die Längenmessung kann vermittels der Längenmesseinheit ein Ende der ersten Leitung dienen, welches Ende in die Vorrichtung eingeführt wird bzw. einführbar ist.

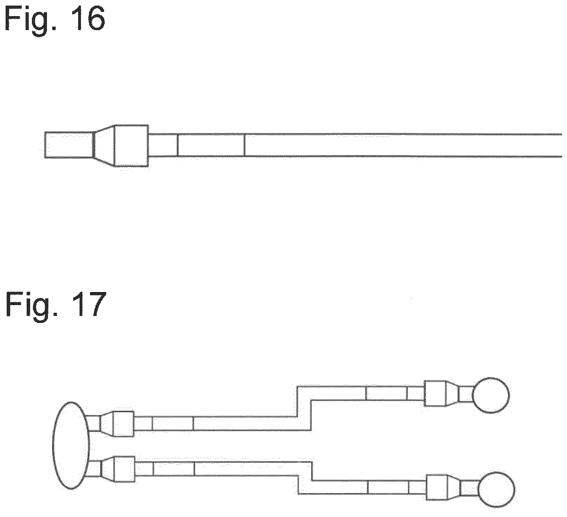

Weiterhin kann es problematisch sein, wenn die Kennzeichnungsträger fest mit der Leitung verbunden sind, z.B. als Klebeschilder oder in Kombination mit Kabelmanschetten, wie sie in Fig. 16 dargestellt sind. Dann können sie nicht im Vorfeld auf der Leitung angebracht werden, denn sie würden unter Umständen beim Einkürzen der Leitungen mit abgeschnitten werden. Sie müssen beim Vervollständigen der unkonfektionierten Enden mit angebracht werden, was für den Werker einen zusätzlichen, fehleranfälligen Arbeitsgang bedeutet.

Die Schwierigkeit besteht darin, einer Leitung eindeutig einen Kennzeichnungsträger zuzuordnen. Eine Leitung ist beispielsweise dadurch eindeutig gekennzeichnet, dass auf ihr die Kennungen aller Anschlusspunkte angegeben sind. Im Falle der nicht vollständig konfektionierten Leitung fehlt aber mindestens eine Kennung, womit sich unter Umständen einige Leitungen nicht ohne weitere Informationen eindeutig identifizieren lassen.

Diese Problemstellung ist in Fig. 17 anhand einer sogenannten Doppelbelegung grafisch dargestellt. Die beiden hier dargestellten Leitungen sind verwechslungsfähig, da die Schilder zur Kennung der Anschlusspunkte B und C erst nachträglich angebracht werden, fehlt dem Werker die Information welches der beiden Leitungen den Anschlusspunkt A-B und welche Leitung den Anschlusspunkt A-C verbinden soll.

Zur vorteilhaften Verringerung der Gefahr einer Fehlverdrahtung von teilweise vorkonfektionierten Leitungen kann das erfindungsgemäße Verfahren im Rahmen der Verdrahtung zweier Anschlusspunkte der elektrischen Montageanordnung zudem die folgenden weiteren Schritte aufweisen:
a) Bereitstellen einer teilweise vorkonfektionierten Leitung, umfassend
   die elektrische Leitung und
   einen ersten Kennzeichnungsträger zur Kennung eines ersten von zwei Anschlusspunkten;
   eine Kennzeichnung an oder auf der Leitung umfassend Informationen zur Erstellung eines zweiten Kennzeichnungsträgers zur Kennung eines zweiten der zwei Anschlusspunkte und/oder zur Zuordnung eines passenden Leitungsverbinders;

Die Vorkonfektionierung kann im Rahmen des Verfahrens zur Verdrahtung vorzugsweise werksseitig erfolgen, während das Verfahren zur Verdrahtung selbst bevorzugt am Ort der Montage der Leitung, also bei der zu verkabelnden elektrischen Montageanordnung, z.B. dem Schaltschrank, erfolgt.
b) Ablängen der elektrischen Leitung unter Ausbildung einer ersten elektrischen Leitung und einer zweiten elektrischen Leitung zur Anordnung in der elektrischen Montageanordnung, wobei die erste elektrische Leitung die Kennzeichnung trägt,

Die zweite elektrische Leitung dient der Anordnung in der elektrischen Montageanordnung. Sie weist die ideale Einbaulänge auf. Die erste elektrische Leitung kann idealerweise dabei bereits sowohl über einen ersten Kennzeichnungsträger zur Kennzeichnung des ersten Anschlusspunktes verfügen als auch über einen Leitungsverbinder mittels welchem die Leitung an den ersten Anschlusspunkt angeschlossen werden kann. Der erste Kennzeichnungsträger und der erste Leitungsverbinder müssen allerdings zwar nicht zwingend vorgesehen sein, allerdings ist die Verwechslungsgefahr beim Anschluss der Leitung bereits wesentlich durch die Anordnung zumindest eines dieser beiden Elemente welche dem Fachmann als Konfektionierung bekannt ist. Die einseitige Konfektionierung einer elektrischen Leitung vor deren Bereitstellung an einen Werker, also die Konfektionierung an einem Ende der Leitung wird im Rahmen der vorliegenden Erfindung als eine teilweise Vorkonfektionierung verstanden.

Die erste elektrische Leitung kann bevorzugt die Kennzeichnung mit Informationen zum Erstellen eines Kennzeichnungsträgers tragen. Dieser Kennzeichnungsträger kann idealerweise bei einer Leitung mit lediglich zwei Enden, die Kennung des zweiten Anschlusspunktes aufweisen.

Während also in einer bevorzugten Ausführungsvariante der Erfindung der erste Kennzeichnungsträger werksseitig vor der Auslieferung an einen Werker bei der Vorkonfektionierung angebracht wird, so wird der zweite Kennzeichnungsträger erst vor Ort, bei der Montage der elektrischen Leitung in der elektrischen Montageanordnung erstellt und an der Leitung angeordnet.

Dies erfolgt durch
c) Auslesen der Informationen der Kennzeichnung durch eine Auslesevorrichtung und
c1 Erstellen des zweiten Kennzeichnungsträgers zur Kennung des zweiten Anschlusspunkts und/oder
c2 Versehen der zweiten Leitung mit einem durch die Kennzeichnung vorgegebenen Leitungsverbinder;

Das Auslesen kann z.B. durch einen Barcodescanner erfolgen, sofern die Kennzeichnung als Barcode ausgebildet ist. Sodann kann ein Drucker das Erstellen des Kennzeichnungsträgers vornehmen. Entsprechende Drucker sind an sich bekannt, beispielsweise von der Firma Partex.

Alternativ oder zusätzlich kann auch ein Versehen der zweiten Leitung mit einem durch die Kennzeichnung vorgegebenen Leitungsverbinder erfolgen.

Bei den Kennzeichnungsträgern für elektrische Leitungen gibt es vielfältige Ausgestaltungen. Neben adhäsiven Kennzeichnungsträgern haben sich insbesondere Kennzeichnungsträger als praktisch erwiesen welche die elektrische Leitung zumindest bereichsweise umgreifen. Diese können Markierungsschilder aufweisen, welche unmittelbar bedruckbar sind oder auf welche die Kennzeichnung, z.B. als Aufkleber oder als Einschiebeabschnitt in einem Sichtfenster gehalten wird.

Entsprechend erfolgt die
c) Applikation des Kennzeichnungsträgers an oder auf die zweite elektrische Leitung zur Anordnung in der elektrischen Montageanordnung je nach Ausgestaltung des Kennzeichnungsträgers.

Die vorgenannten zusätzlichen Verfahrensschritte haben den besonderen Vorteil, dass beim Ablängen der Leitung ein unbeabsichtigtes Abtrennen eines Kennzeichnungsträgers vermieden wird, da der Kennzeichnungsträger erst vor Ort erstellt wird.

Dabei befindet sich die Kennzeichnung auf der abgelängten ersten Leitung, welche typischerweise oft als Abfallprodukt angesehen wird. Diese meist kurzen Endabschnitte können allerdings hervorragend ausgelesen werden und sind aufgrund ihrer geringen Länge gut handhabbar.

Vorteilhafterweise erfolgt das Bereitstellen einer teilweise vorkonfektionierten elektrischen Leitung in Schritt a) durch ein Bereitstellen der Leitung mit einem ersten Kennzeichnungsträger zur Kennung eines ersten von zwei Anschlusspunkten, wobei die Kennzeichnung der Leitung Informationen zur Erstellung eines zweiten Kennzeichnungsträgers zur Kennung eines zweiten der zwei Anschlusspunkte umfasst. Weiterhin weist die nach dem Ablängen in Schritt b) ausgebildete zweite elektrische Leitung den ersten Kennzeichnungsträger zur Anordnung in der elektrischen Montageanordnung auf.

Zudem erfolgt das Erstellen des zweiten Kennzeichnungsträgers zur Kennung des zweiten der zwei Anschlusspunkte anhand der ausgelesenen Informationen in Schritt c).

Die Applikation des zweiten Kennzeichnungsträgers erfolgt sodann auf die zweite elektrische Leitung, welche Anordnung in der elektrischen Montageanordnung in Schritt d) vorgesehen ist.

Die Kennzeichnung mit den Informationen zur Erstellung des zweiten Kennzeichnungsträgers zur Kennung des zweiten der zwei Anschlusspunkte kann vorteilhaft auf einem Wickeletikett angeordnet sein. Dies ermöglicht ein einfaches Abtrennen des Wickeletiketts von der abgelängten ersten Leitung, meist dem Abfallendstück, und ein Aufkleben auf einen Bogen. Zudem lassen sich solche Etiketten sehr einfach einscannen bzw. Erfassen.

Die Kennzeichnung mit den Informationen zur Erstellung des zweiten Kennzeichnungsträgers zur Kennung des zweiten der zwei Anschlusspunkte kann als ein Barcode und/oder einem QR-Code ausgebildet sein. Dadurch kann auf bekannte Auslesesysteme (Barcodescanner, Handy-Apps) beim Erfassen der vorgenannten Informationen zurückgegriffen werden.

Nach Schritt b), insbesondere nach Schritt d), kann eine Applikation des Leitungsverbinders, insbesondere eines Stecker, einer Aderendhülse und/oder eines Kabelschuhs, insbesondere am zweiten Ende der zweiten abgelängten Leitung, welche zur Anordnung in der elektrischen Montageanordnung vorgesehen ist, erfolgen.

Das Auslesen der Kennzeichnung kann durch einen berührungslosen Scan, vorzugsweise einem optischen Scan, erfolgen.

Zumindest einer der beiden Kennzeichnungsträger kann vorteilhaft zusätzlich zur Kennung der Anschlusspunkte auch Informationen hinsichtlich dem Leitungstyp, dem Querschnitt und/oder der Farbe der Leitung aufweisen. Im Fall des zweiten Kennzeichnungsträgers sind diese Informationen teil der Kennzeichnung, welche z.B. auf dem Wickeletikett vorgesehen sind.

Nach dem Auslesen der Informationen gemäß Schritt c) kann eine Information zu dem zu verwendenden Leitungsverbinder durch die Auslesevorrichtung erfolgen. Beispielsweise kann in einem Sichtfeld angezeigt werden welcher Leitungsverbinder an das zweite Ende der zweiten Leitung angebracht werden muss.

Weiterhin umfasst die Erfindung eine teilweise vorkonfektionierte elektrische Leitung, insbesondere zur Verwendung in einem erfindungsgemäßen Verfahren, wobei die teilweise vorkonfektionierte Leitung an einem ersten Ende einen Leitungsverbinder zur Verbindung mit einem ersten Anschlusspunkt einer elektrischen Montageanordnung aufweist und an einem zweiten Ende keinen Leitungsverbinder aufweist,

Die Leitung kann in einem Endbereich des zweiten Endes eine Kennzeichnung umfassend Informationen zur Erstellung eines Kennzeichnungsträgers zur Kennung eines zweiten Anschlusspunkts der elektrischen Montageanordnung aufweist.

Etikettierte Leitungen sind bereits aus der DE 199 18 212 A1 bekannt. Allerdings werden hierin keine einseitig vorkonfektionierten Leitungen mit Leitungsverbinder und Kennzeichnungsträger offenbart. Die vorliegenden vorkonfektionierten Leitungen ermöglichen in Weiterführung zu der Idee der DE 199 18 212 A1 einen noch schnelleren und einfacheren Anschluss von Leitungen in einer elektrischen Montageanordnung.

Nachfolgend wird die Erfindung anhand einiger Ausführungsvarianten und unter Zuhilfenahme der beiliegenden Figuren näher beschrieben. Es zeigen:
- Fig. 1: schematische Darstellung der Verkabelung eines Schaltschranks;
- Fig. 2: schematische Darstellung einer Kabelrolle;
- Fig. 3a: schematische Darstellung einer elektrischen Leitung mit einer Ausgangslänge;
- Fig. 3b: schematische Darstellung einer ersten elektrischen Leitung mit einer ersten Länge und eine zweite elektrische Leitung mit einer zweiten Länge;
- Fig. 4a, 4b, 4c, 4d: schematische Darstellungen verschiedener Ausführungen einer elektrischen Leitung mit einer Kennzeichnung;
- Fig. 5: schematische Darstellung einer weiteren Ausführungsform einer mit einer Kennzeichnung versehenen elektrischen Leitung.
- Fig. 6: schematische Darstellung der vermittels einer Kennzeichnung ermittelbaren Information;
- Fig. 7: schematische Darstellung einer Ausführungsform einer Vorrichtung zur Längenbestimmung;
- Fig. 8: schematische Darstellung einer weiteren Ausführungsform einer Vorrichtung zur Längenbestimmung;
- Fig. 8a: schematische Detaildarstellung von einem Ausschnitt der in Fig. 8 dargestellten Transportvorrichtung aus Blickrichtung der Vorschubrichtung;
- Fig. 9: Ablaufdiagramm einer Ausführungsform eines Verfahrens zur Leitungslängenbestimmung;
- Fig. 10: eine Leitung im teilweise vorkonfektionierten ausgeliefertem Zustand;
- Fig. 11: Leitung der Fig. 10 nach der Konfektionierung und dem Verbau in einer elektrischen Montageanordnung;
- Fig. 12: Kabelüberstand nach dem Verbau der Leitung der Fig. 11;
- Fig. 13: Erstellen eines Kennzeichnungsträgers;
- Fig. 14: Zusammenbau einer Leitung;
- Fig. 15: Darstellung einer vollständig konfektionierten Leitung;
- Fig. 16: Darstellung einer an sich bekannten Lösung einer teilweise vorkonfektionierten Leitung; und
- Fig. 17: Darstellung eines sich bei der bisherigen Konfektionierung ergebendes Problems.

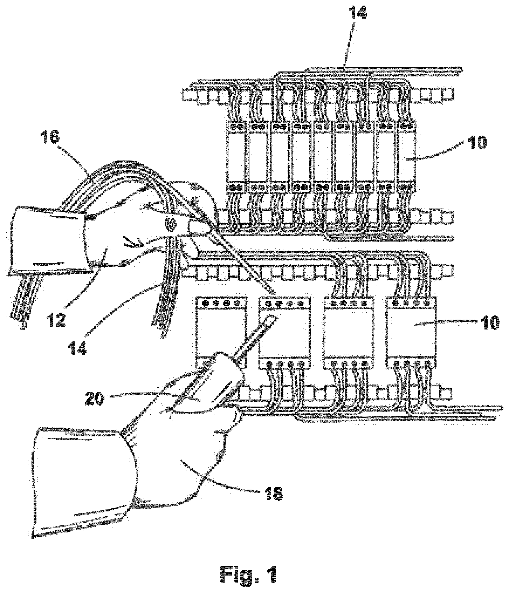

Figur 1 zeigt in schematischer Darstellung einen Ausschnitt aus einem Schaltschrank, dem ersten Schaltschrank. In diesem Schaltschrank ist eine Vielzahl von Geräten 10, wie beispielsweise Schalter, Schütze, Relais, Steuerungselemente usw. vorgesehen, die bereits teilweise verkabelt sind. Des Weiteren sind schematisch die Hände 12,18 eines Monteurs gezeigt, der gerade weitere Kabel 14 bzw. Leitungen in entsprechende Anschlussklemmen 16 einsetzt. Wie Figur 1 zu entnehmen ist, hat der Monteur ein Kabelbündel 17 bzw. einen Verdrahtungssatz zwischen Daumen und Zeigefinger und kann so die einzelnen Kabel 14 in einfacher Weise ergreifen und in die entsprechende Anschlussklemme 16 einführen, bevor er dann die Anschlussklemme 16 mit dem in der anderen Hand 18 befindlichen Schraubendreher 20 festzieht.

Das Kabelbündel 17 kann dabei eine Vielzahl von Leitungen mit verschiedenen Kabelstärken und -farben umfassen.

Zudem kann es erforderlich sein die Länge eines oder mehrerer elektrische Leitungen anzupassen um eine optimale Verkabelung, insbesondere ohne zu lange und überstehende elektrische Leitungen, zu erhalten. Zu diesem Zweck kann der Monteur bspw. vermittels einer Kabelzange, nicht gezeigt, eines oder mehrere der Leitungen kürzen, d.h. abzulängen, um deren Länge individuell anzupassen. Dies ist bspw. bei einer Erstverkabelung elektrischen Montageanordnung erforderlich bei der die Länge der Leitungen, die ausreichend ist, um die Geräte miteinander zu verbinden, unter Umständen noch nicht bekannt ist.

Zu diesem Zweck können ein oder mehrere Leitungen L0, insbesondere jeweils mit einer Ausgangslänge l0, vorbereitet werden, mit denen der Monteur die Verkabelung durchführen soll. Diese Ausgangslängen l0 können für alle Leitungen gleich sein oder aber auch leitungsspezifisch sein, d.h. eine unterschiedliche Ausgangslänge l0 aufweisen.

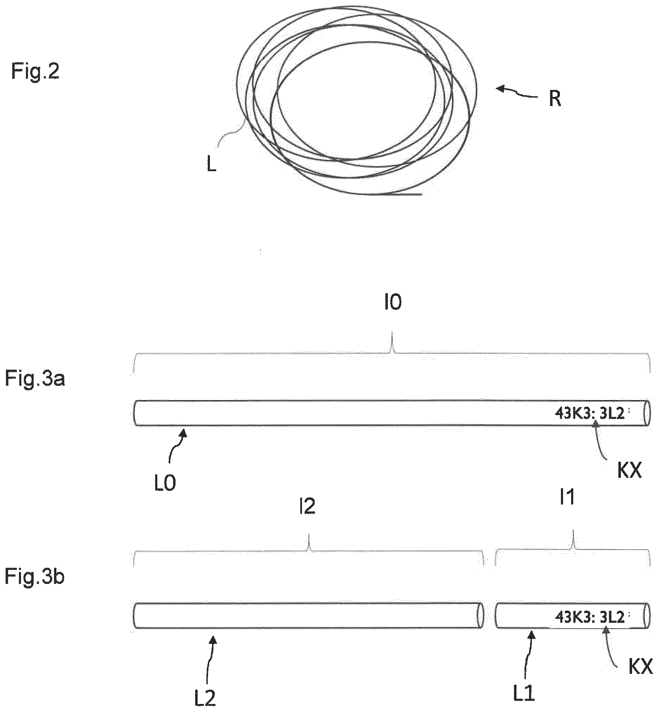

Eine Leitung L0 mit einer solchen Ausgangslänge l0 kann bspw. durch Ablängen eines Abschnitts einer Kabelrolle R hergestellt werden. Eine solche Kabelrolle ist in Figur 2 dargestellt.

In Figur 3a ist eine Leitung L0 mit einer Ausgangslänge l0 dargestellt. Eine solche Leitung L0 mit einer Ausgangslänge I0 kann durch Ablängen einer längeren Leitung L, wie im vorherigen Absatz beschrieben, hergestellt werden.

In Figur 3b sind zwei Abschnitte dieser Leitung L0 dargestellt, die durch Ablängen der Leitung L0 hervorgehen. Die zweite Leitung L2 ist dabei zum Einbau in der elektrischen Montageanordnung bestimmt und kann direkt in der elektrischen Montageanordnung verbleiben, während es sich bei der ersten Leitung L1 um eine überschüssige Leitung handelt, die beim Ablängen der Leitung L0 entsteht.

Auf der Leitung L0 ist eine Kennzeichnung KX angebracht, vermittels der die Ausganglänge der Leitung L0 bestimmt werden kann. Diese Kennzeichnung KX kann bereits auf der Leitung L, die die Kabelrolle R bildet, angebracht sein. Alternativ kann die Kennzeichnung KX während oder nach dem Ablängvorgang zum Herstellen der Leitung L0 an der Leitung L angebracht werden.

Bei der Kennzeichnung KX kann es sich auch um eine Eigenschaft der Leitung L, L0, L1 selbst handeln. Bspw. kann die Farbe der Leitung, deren Durchmesser oder andere intrinsische Merkmale der Leitung L, L0, L1 zu deren Identifizierung dienen. Einer Kennzeichnung KX kann insbesondere eine Ausgangslänge l0 der Leitung L0 zugeordnet werden (bzw. umgekehrt), insbesondere wenn bekannt ist, von welchem Leitungstyp eine oder mehrere Leitungen mit einer Ausgangslänge l0 hergestellt werden sollen.

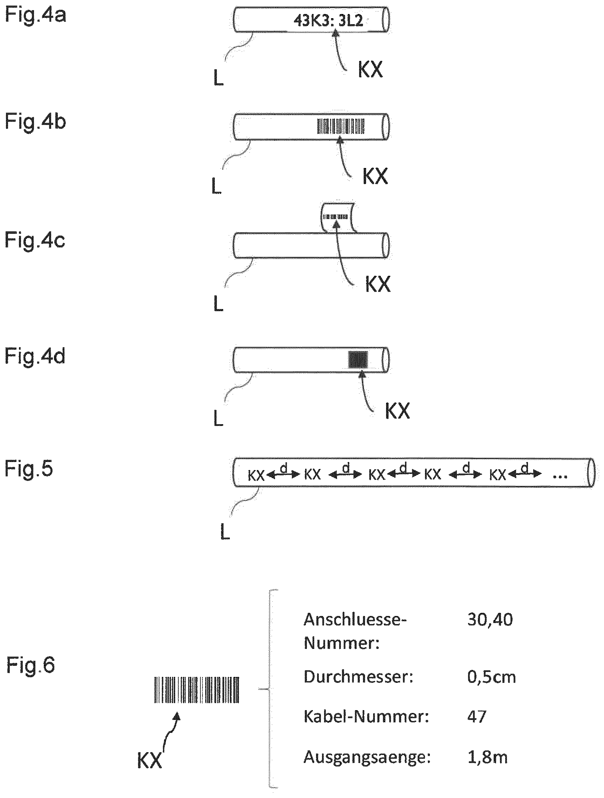

Vorliegend ist in der Ausführungsform gemäß Figur 3a eine Kennzeichnung in Form alphanumerischer Zeichen auf der Leitung angebracht. Jedoch kann die Kennzeichnung auch in anderer Weise, wie bspw. in Figuren 4a, 4b, 4c, 4d und Figur 5 dargestellt und beschrieben, erfolgen.

In Figur 6 sind die Informationselemente, die einer Kennzeichnung KX zugeordnet sein können, dargestellt. Der Leitungstyp kann bspw. durch eine oder mehrere Anschlussbezeichnungen, wie zum Beispiel Anschlussnummern, an die die Enden der Leitung L0 angeschlossen werden sollen, gekennzeichnet sein. Ferner kann der Leitungstyp durch den Durchmesser der Leitung L, mit oder ohne Ummantelung, gekennzeichnet sein. Zudem kann der Leitungstyp durch eine der Leitung L zugeordnete Bezeichnung wie bspw. eine Kabel-Nummer gekennzeichnet sein. Eine oder mehrere dieser Informationen (die die Kennung der Leitung L bilden) sowie die Ausgangslänge l0 der Leitung L0 werden der Kennzeichnung KX zugeordnet oder können in der Kennzeichnung KX enthalten sein. Anstelle des in Figur 6 gezeigten Barcodes kann auch eine andere Art der Kennzeichnung KX vorgenommen werden, insbesondere ist eine Kennzeichnung mit Klartext (Lateinisches Alphabet und/oder arabische Ziffern) möglich. Ferne ist eine Codierung einer oder mehrerer der genannten Informationselemente möglich.

Die Kennzeichnung ist zumindest einmal auf einer Leitung L0 mit der Ausgangslänge I0 vorhanden.

Die Leitung L0 kann jedoch mehrfach mit der Kennzeichnung KX gekennzeichnet sein. Vorzugsweise ist die Kennzeichnung KX an wenigstens einem Ende der Leitung L0 angebracht oder an beiden Enden der Leitung L0 angebracht. Dadurch ist nach Ablängen der Leitung L0 und anfallen der ersten Leitung L1 und der zweiten Leitung L2 stets eine Kennzeichnung KX auf der überschüssigen Leitung L1 vorhanden, die zum Identifizieren der Leitung L1 verwendet werden kann.

In Figur 4a ist eine Kennzeichnung KX in Form eines auf der Leitung L angebrachten alphanumerischen Codes dargestellt.

In Figur 4b ist eine Kennzeichnung KX in Form eines (2D) Barcodes dargestellt.

In Figur 4c ist eine Kennzeichnung KX in Form eines an der Leitung L angebrachten Fähnchens dargestellt. Auf dem Fähnchen wiederum kann eine Codierung vorhanden sein. Ferner ist eine Kennzeichnung in Form einer Tülle möglich. Auch proprietäre Kennzeichnungssysteme können dabei zur Kennzeichnung verwendet werden.

In Figur 4d ist eine Kennzeichnung KX in Form eines RFID Chips dargestellt über den die Leitung L identifiziert werden kann.

Bspw. kann somit eine elektrische Leitung mit wenigstens einer Kennzeichnung KX in Form eines RFID-Chips vorliegen. Eine oder mehrere der RFID-Chips können vermittels eines als Erkennungseinheit dienenden Sensors ausgelesen werden.

Die Kennzeichnung KX kann alternativ oder zusätzlich auch als QR-Code realisiert sein.

Figur 5 zeigt eine Ausführungsform einer elektrischen Leitung mit mehreren Kennzeichnungen KX, die vorzugsweise äquidistant, auf der Leitung angebracht sind. Dadurch kann einerseits die Leitung identifiziert werden und andererseits die Länge der Leitung bestimmt werden. Eine Leitung mit einer Kennzeichnung gem. Figur 5 kann somit identifiziert werden, ohne dass dabei auf die Orientierung der Leitung oder das Vorhandensein einer Kennzeichnung in einem Abschnitt der Leitung geachtet werden muss. Ferner kann durch die regelmäßige Anordnung der Kennzeichnungen auf der Leitung die Länge eines Abschnitts bestimmt werden, der durch Ablängen der Leitung entsteht.

Bei den in Figur 4a, 4b, 4c, 4d und Figur 5 dargestellten Leitung L kann es sich um die Leitung L0, L1 oder L2 handeln.

Figur 7 zeigt eine Ausführungsform einer Vorrichtung V1 zur Leitungslängenbestimmung. Die Vorrichtung V1 wird zur Bestimmung der Länge I1 einer ersten Leitung L1 verwendet, wobei die erste Leitung L1 durch Ablängen einer Leitung L0 in eine erste Leitung L1 und eine zweite Leitung L2 entsteht.

Die Einheiten der in Figur 7 gezeigten Vorrichtung V1 sind dabei besonders bevorzugt in einem Gehäuse G angeordnet. Jedoch ist es auch möglich, dass ein oder mehrere Einheiten außerhalb des Gehäuses G angeordnet und operativ mit den innerhalb des Gehäuses G liegenden Einheiten verbunden sind.

Die Vorrichtung V1 weist eine Längenmesseinheit LE zum Bestimmen einer Länge einer elektrischen Leitung auf. Bspw. kann es sich dabei um eine Waage handeln. Ferner kann die Länge einer Leitung optisch erfasst werden. In diesem Fall kann es sich bei der Längenmesseinheit um eine Photokamera mit einer Bilderkennung handeln. Bspw. kann ein Vergleichsmaßstab zur Längenbestimmung zusammen mit der Leitung erfasst werden und daraus die Länge der Leitung bestimmt werden.

Ferner weist die Vorrichtung V1 eine Erkennungseinheit EE auf, die es ermöglicht eine Kennung der Leitung zu bestimmen. Bspw. kann es sich bei der Erkennungseinheit um eine Kamera handeln die vermittels einer Bilderkennung eine Kennzeichnung der Leitung erfasst. Vermittels der Kennzeichnung wird eine Kennung der Leitung bestimmt, vermittels der die Leitung identifizierbar ist. Bei der Kennung kann es sich um ein Informationselement handeln vermittels welchem die Leitung identifizierbar ist. Dies kann wie in Figur 6 dargestellt eine oder mehrere Anschlussnummern der Leitung, ein Durchmesser der Leitung und/oder eine der Leitung zugeordnete Nummer sein.

Die Erkennungseinheit EE und die Längenmesseinheit LE können dabei als eine einzige Einheit ausgeführt sein. Bspw. kann es sich dabei um vorgenannte Kamera handeln.

Ferner weist die Vorrichtung V1 eine Speichereinheit SE auf, vermittels der die gemessene Länge I1 der Leitung L1 und die ermittelte Kennung der Leitung L1 gespeichert werden. Vorzugsweise werden diese mit einem verweis aufeinander gespeichert und derart einander zugeordnet. Dadurch ist die gemessene Länge I1 der Leitung L1 vermittels der Kennung abrufbar.

Die Speichereinheit SE kann dabei Bestandteil der Längenmesseinheit LE und/oder der Erkennungseinheit EE sein. Bspw. können die Längenmesseinheit LE, die Erkennungseinheit EE und die Speichereinheit SE als eine Einheit ausgeführt sein. Bspw. kann es sich dabei um eine Photokamera mit entsprechenden Funktionsmodulen handeln. Insbesondere kann die Kamera mit Funktionsmodulen zum Ausführen der vorgenannten Funktionen handeln.

Die Speichereinheit SE kann auch dazu dienen, anhand der, insbesondere mittels der Längenmesseinheit LE, bestimmten Länge und einer, bspw. in der Speichereinheit SE hinterlegten und vorzugsweise mittels der Kennung identifizierten, Ausgangslänge I0 der ersten Leitung L1 eine (in der elektrischen Montageanordnung verbliebene) Konfektionslänge, vorzugsweise durch Differenzbildung zwischen der bestimmten Länge l1 der ersten Leitung L1 und der Ausgangslänge l0, zu bestimmen.

In der Speichereinheit SE können mehrere Leitungstypen hinterlegt sein und vorzugsweise jeweils einer, insbesondere genau einer, Kennung zuordenbar sind. Außerdem kann die Ausgangslänge I0 der Leitung L0 in der Speichereinheit SE gespeichert sein.

Ferner kann eine Leitungsförderungseinheit TE Bestandteil der Vorrichtung V1 sein. Die Leitungsförderungseinheit TE kann dabei dazu dienen, die Leitung L1 in die Vorrichtung V1 einzuziehen und/oder die Leitung L1 aus der Vorrichtung V1 auszugeben. Dabei kann es sich um eine oder mehrere Rollen und/oder einen Raupenzug handeln.

Zusätzlich ist eine Detektionseinheit DE Bestandteil der Vorrichtung V1. Die Detektionseinheit DE kann bspw. in Form einer Lichtschranke ausgebildet sein, d.h. die Unterbrechung eines Lichtstrahls erkennen und ein elektrisches Signal ausgeben. Dadurch kann das Einführen einer Leitung in die Vorrichtung V1 erkannt werden. Zudem kann dadurch ein Bezugspunkt für die Längenmessung erzeugt werden.

Ferner kann eine Kommunikationseinheit KE vorgesehen sein, welche vorzugsweise mit der Speichereinheit SE operativ verbunden ist, und die dazu dient, die Kennung bzw. den Leitungstyp und die Länge der ersten Leitung L1, insbesondere an eine Ablängeinheit, nicht gezeigt, zu übertragen. Diese Kommunikationseinheit KE kann dabei Teil der Speichereinheit SE sein. Wie bereits dargestellt, können die Speichereinheit SE, die Kommunikationseinheit KE, die Längenmesseinheit LE und die Erkennungseinheit EE als eine einzige Einheit ausgeführt sein.

Vermittels der Kommunikationseinheit KE lassen sich die Länge I1 der Leitung L1 und die zugehörige Kennung übertragen und zum Anfertigen eines Leitungsabschnitts L2 zur Verwendung in einer elektrischen Montageanordnung anfertigen. Dafür wird eine der Kennung zugeordnete Ausgangslänge I0 bestimmt. Von dieser Ausgangslänge I0 wird die gemessene Länge 11 der Leitung L1 subtrahiert, um so die in der elektrischen Montageanordnung verbliebene Länge der Leitung L2 zu erhalten. Ausgehend von dieser ermittelten Länge L2 können dann Leitungen mit entsprechender Länge I2 hergestellt werden. Diese Leitungen L2 können bspw. zum Verkabeln eines zweiten Schaltschranks verwendet werden. Bei diesem zweiten Schaltschrank kann es sich um einen Baugleichen Schaltschrank zu demjenigen handeln, der vermittels der Leitung L2, wie oben beschrieben, verkabelt wurde, also dem ersten Schaltschrank.

Die Vorrichtung V1 kann ferner eine Kennzeichnungseinheit, nicht gezeigt, zum Aufbringen einer Kennzeichnung KX auf einer Leitung L, L0, L1, L2 umfassen. Dadurch kann die Leitung L0 vor der Verkabelung in der elektrischen Montageanordnung gekennzeichnet werden und auch die Ausgangslänge I0 vermittels der Vorrichtung V1 erfasst werden. Dadurch kann die Vorrichtung V1 auch im Anschluss verwendet werden um die Länge I1 der Leitung L1 zu bestimmen und dadurch die Länge I2 der in der elektrischen Montageanordnung verbleibenden Leitung L2 bestimmt werden. Die Kennzeichnungseinheit kann damit zum Kennzeichnen der elektrischen Leitung L, L0, L1, L2 mit einer Kennzeichnung KX, vermittels der die Ausgangslänge I0 bestimmbar ist, dienen. Vermittels dieser Kennzeichnung KX bzw. der zugeordneten Kennung ist die erste Leitung L1, vorzugsweise eineindeutig, identifizierbar.

Anhand einer Kennzeichnung KX, die bspw. Bestandteil der Leitung ist, wird die Erkennungseinheit EE die erste Leitung L1 identifizieren. Anschließend kann anhand der Länge I1 der ersten abgelängten elektrischen Leitung L1 und einer vermittels der Kennung bestimmten Ausgangslänge I0 die Länge I2 einer Leitung L2 bestimmt werden.

Die Erkennungseinheit EE dient auch dazu, die Kennung anhand einer Kennzeichnung KX mit der die erste Leitung L1 identifizierbar ist, welche Kennzeichnung KX an der Oberfläche der ersten Leitung L1, vorzugsweise auf der Oberfläche, angebracht ist, zu bestimmen. Die Kennzeichnung KX ist an der Oberfläche der ersten Leitung L1, vorzugsweise auf der Oberfläche, angebracht.

Die Vorrichtung V1 kann aus einer oder mehrerer der vorgenannten Einheiten bestehen, und insbesondere keine Ablängeinheit zum Ablängen einer elektrischen Leitung, aufweisen.

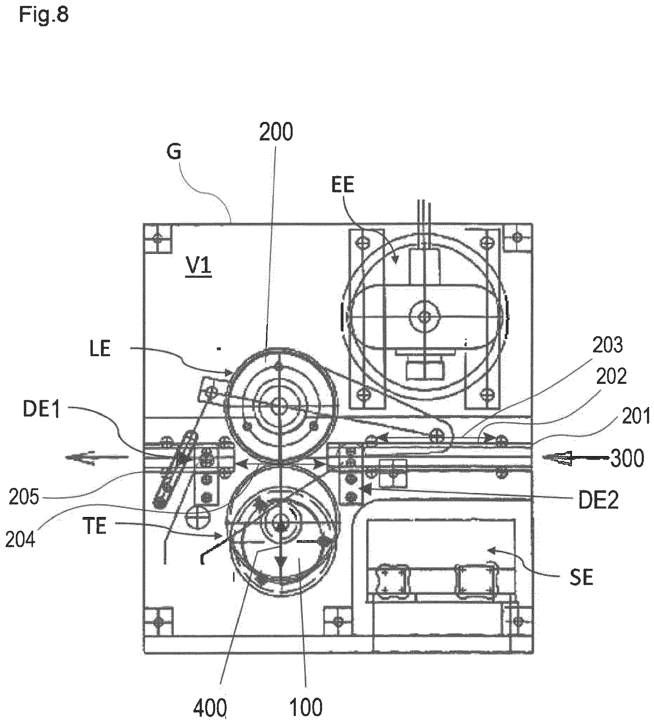

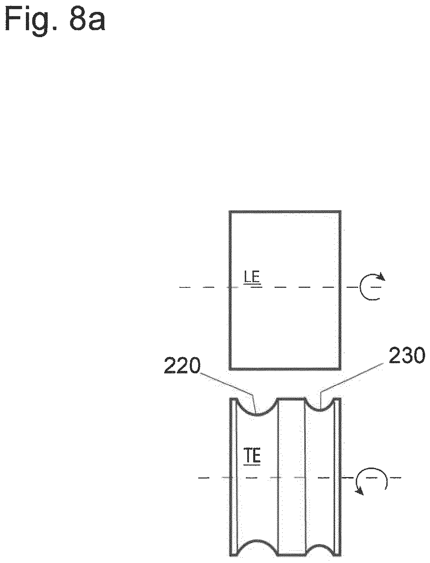

Figur 8 zeigt eine weitere Ausführungsform der Vorrichtung V1 zur Leitungslängenbestimmung.

Die Vorrichtung V1 weist einen Eingang 201 zum Einführen einer elektrischen Leitung L1 auf. Im Bereich des Eingangs 201 ist zumindest ein erster Kabelkanal 202 angeordnet, welcher zur Führung der Leitung L1 innerhalb der Vorrichtung V1 vorgesehen ist. Die Leitung L1 wird über einen Ausgang 205 auf einer zum Eingang 201 gegenüberliegenden Seite der Vorrichtung V1 ausgeführt.

Entlang des ersten Kabelkanals 202 kann eine erste Messtrecke 203 für die Bestimmung der Kennung mittels der Erkennungseinheit EE vorgesehen sein. Ferner ist innerhalb der Vorrichtung V1 eine zweite Messstrecke 204 für die Bestimmung der Länge I1 der ersten Leitung L1 vorgesehen. Diese Messtrecken 203 und 204 sind dabei hintereinander angeordnet. Dabei wird vermittels einer optischen Erfassung insbesondere durch eine als Photokamera ausgebildete Erkennungseinheit EE, die senkrecht zum Kabelkanal angeordnet ist, eine Kennzeichnung KX der Leitung L1 erfasst.

Die wenigstens teilweise in die Vorrichtung V1 eingeführte Leitung L1 wird über eine Leitungsfördereinheit TE in einer Vorschubrichtung 300 vom Eingang 201 zum Ausgang 205 gefördert.

Die in Fig. 8 dargestellte Leitungsfördereinheit TE weist eine oder mehrere erste Rollen 100 und eine oder mehrere zweite Rollen 200 auf. Im Beispiel der Fig. 8 ist die erste Rolle 100 im Förderbetrieb in Gravitationsrichtung unterhalb der Leitung L1 angeordnet. Sie ist motorbetrieben und dient dem Vorschub der Leitung innerhalb der Vorrichtung V1.

Die Rolle 100 kann auch als Transportrolle bezeichnet werden. Sie kann senkrecht oder schräg zur Vorschubrichtung 300 der Leitung L1 beweglich, insbesondere federnd gelagert sein, so dass die Leitung L1 mit einem bestimmten Anpressdruck gegen die zweite Rolle 200 gedrückt wird.

Die zweite Rolle 200 kann als Lagerrolle ausgebildet sein, welche sich mitdreht. Selbstverständlich können die Rollen 100 und 200 auch in ihrer Funktion vertauscht in der Vorrichtung vorliegend, so dass die zweite Rolle 200 motorbetriebene Transportrolle. Zudem kann auch zweite Rolle 200 sowohl als Lagerrolle als auch als Transportrolle senkrecht oder schräg zur Vorschubrichtung 300 der Leitung L1 beweglich, insbesondere federnd gelagert sein.

Eine der beiden Rollen 100 oder 200 kann als ein sogenanntes Zählrades, auch als Inkrementalgeber bekannt, als Teil einer Längenmesseinheit LE ausgebildet sein.

Wie zuvor beschrieben kann vermittels einer als Längenmessung bspw. über die Drehung der Rollen 100, 200 die Länge I1 der Leitung L1 bestimmt werden. Sowohl die Längenmesseinheit LE als auch die Erkennungseinheit EE sind mit einer Speichereinheit SE verbunden, in der die jeweiligen Ergebnisse der Längenmessung und der Erkennungseinheit EE abgespeichert werden.

Um eine möglichst präzise Längenmessung zu erhalten, ist zudem zur Ermittlung eines Bezugspunkts für die Längenmessung eine erste Detektionseinheit DE1 vorgesehen, mittels welcher ein Leitungsanfang erkannt werden kann. Wird eine Leitung L1 am Detektionspunkt erkannt, kann ein Offset zur vermittels der Längenmesseinheit LE ermittelten Länge addiert werden und diese korrigierte Länge zusammen mit der Kennung der Leitung L1 in der Speichereinheit SE gespeichert werden.

Ferner weist die Vorrichtung V1 ein Gehäuse G auf, in dem die Erkennungseinheit EE, die Längenmesseinheit LE, die Detektionseinheit DE1 und die Speichereinheit SE angeordnet sind.

Die Längenmesseinheit LE kann vorzugsweise als ein Inkrementgeber in Form eines Zählrades ausgebildet sein.

Die Vorrichtung weist zudem eine zweite Detektionseinheit DE2 zur Detektion eines Leitungsendes auf.

Durch die bewegliche Lagerung der Rollen 100 und 200 kann ein Klemmmechanismus, z.B. durch Federn oder dergleichen, realisiert sein, welche die Transportrolle 100 gegen die Lagerrolle 200 pressen, wobei die Leitung zwischen der Transportrolle 100 und der Lagerrolle 200 verpresst bzw. verklemmt vorliegt. Durch den Anpressdruck und die Rotation der Transportrolle 100 kann eine Weiterbewegung der Leitung in Vorschubrichtung 300 erfolgen und durch die Funktionalität des Zählrades der Transport- oder der Lagerrolle 100, 200 erfolgt die Längenmessung.

Es ist daher vorteilhaft, wenn die Transportrolle und/oder das Zählrad schräg, insbesondere senkrecht, zur Vorschubrichtung der Leitung insbesondere unter Ausbildung einer Rückstellkraft verschiebbar (siehe Bezugszeichen 400) ausgebildet ist, um Leitungen mit größerem Querschnitt aufzunehmen. Die Verschiebbarkeit kann beispielsweise durch eine federnde Lagerung erreicht werden.

Die vorgenannte zweite Detektionseinheit DE2 ist vorgesehen, damit die Leitungsfördereinheit TE nach der Längenmessung der Leitung L1 automatisch stoppt. Auch bei dieser zweiten Detektionseinheit DE2 kann es sich um eine Lichtschranke handeln, es können allerdings auch andere Varianten zur Ermittlung des Leitungsendes, z.B. ein Sensor zur Ermittlung des Anpressdrucks der Transportrolle oder dergleichen, vorgesehen sein.

Die Vorrichtung kann zudem eine Zuführvorrichtung zur Einführung und zum Transport von Leitungen mit unterschiedlichen Leiterdurchmessern aufweisen. Die Zuführvorrichtung kann teilweise in der Erkennungseinheit EE implementiert sein.

Weiterhin weist die Transportrolle 100 der Transporteinheit TE oder wahlweise die Lagerrolle 200 zumindest zwei Laufbahnen 220, 230 mit unterschiedlicher Rillentiefe und/oder Rillenbreite auf. Die Transportrolle ist in Fig. 8 lediglich seitlich dargestellt, wird jedoch in Fig. 8a von vorne, also von der Vorschubrichtung aus, dargestellt. Dabei ist in Fig. 8 und 8a die Lagerrolle 200 als Inkrementgeber ausgebildet und somit auch Teil der Längenmesseinheit LE.

Alternativ können auch zumindest zwei Transportrollen oder Lagerrollen 100, 200 mit jeweils nur einer Laufbahn, vorzugsweise achsparallel zueinander, vorgesehen sein. Dabei weisen die Laufbahnen zueinander unterschiedliche Rillentiefen und/oder Rillenbreiten auf.

Nach der Ermittlung eines Leitungsdurchmessers oder einer davon abhängigen Grö-βe. z.B. dem Leitungsquerschnitt, kann eine Umlenkung der Leitung z.B. durch Umlenkung des Kabelkanals 202 und/oder der Transportrolle(n) und/oder des Lagerrolle(n) erfolgen, so dass die Leitung der Laufbahn zugeordnet wird, welche am ehesten bezogen auf die Rillentiefe und/oder Rillenbreite, zur Führung der Leitung L1 in der Vorrichtung geeignet ist.

Nach einem Erfassen des Leiterquerschnitts kann somit die Zuordnung der Laufbahn in Abhängigkeit von dem erfassten Leiterquerschnitt erfolgen.

Laufbahnen mit zu großer Rillenweite würden das Verklemmen einer Leitung mit kleinem Leitungsdurchmesser erschweren. Demgegenüber können Leitungen mit zu großem Leitungsquerschnitt seitlich aus der durch die Laufbahn vorgegebenen Führung der Leitungen rutschen.

In einer bevorzugten Ausführungsvariante der Erfindung umfasst die Kennzeichnung KX eine Kennung hinsichtlich des Leitungsdurchmessers, so dass die Ermittlung des Leitungsdurchmessers durch Auslesen der Kennung erfolgen kann.

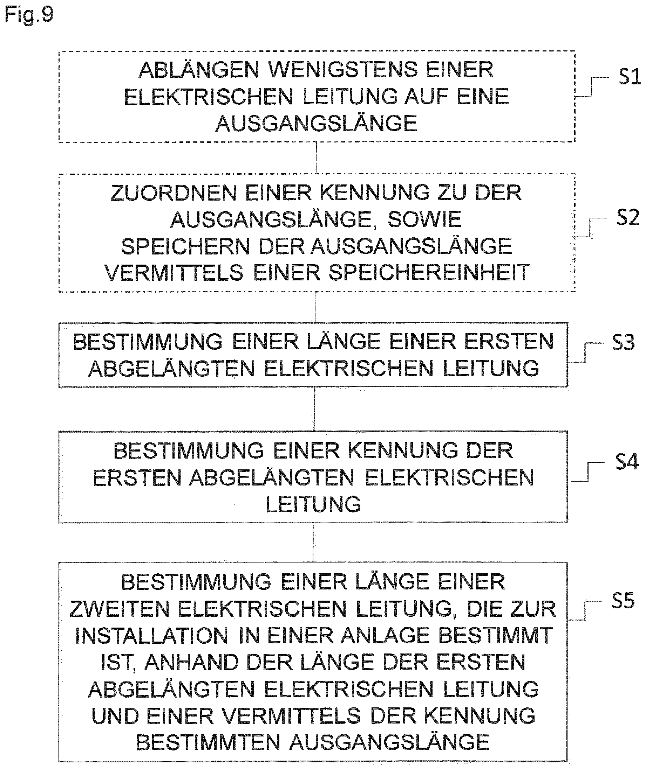

Figur 9 zeigt ein Ablaufdiaramm gemäß einer Ausführungsform zur Leitungslängenbestimmung. In einem ersten Schritt S1 wird eine elektrische Leitung L0 auf eine Ausgangslänge l0 abgelängt. Dabei kann die Leitung L0 von einem bspw. zu einer Kabelrolle aufgewickelten Leitung L abgetrennt werden.

Vorzugsweise werden mehrere Leitungen auf entsprechende Ausgangslängen abgelängt und diese Leitungen dann einem Monteur zur Verkabelung einer elektrischen Montageanordnung bereitgestellt, wie in Figur 1 dargestellt. Somit werden bspw. Leitungen unterschiedlichen Leitungstyps mit verschiedenen Ausgangslängen oder gleichen Ausgangslängen hergestellt. Die Ausgangslänge l0 ist dabei vorzugsweise so bemessen, dass sie ausreichend ist, um an die vorgesehenen Anschlüsse in der elektrischen Montageanordnung angeschlossen zu werden.

Ferner umfasst eine Ausführungsform des Verfahrens, bspw. anschließend an den Schritt S1, einen Schritt S2 in dem einer Kennung der Leitung L1 die Ausgangslänge I0 dieser Leitung L1 zugeordnet und vorzugsweise abgespeichert wird. Sind mehrere Leitungen vorhanden kann jeweils einer dieser Leitung zugeordnete Kennung eine Ausgangslänge zugeordnet werden. Dabei kann bevorzugt eine Ausgangslänge l0 mehreren Kennungen zugeordnet werden, jedoch einer Kennung höchstens eine Ausgangslänge zugeordnet werden.

Die Ausgangslänge I0 und die Kennung können dabei in einer zentralen Datenbank oder einem Anlagenplanungstool gespeichert werden. Eine entsprechende Kennzeichnung KX kann vermittels einer Kennzeichnungseinheit, wie bspw. einem Drucker, auf der Leitung L angebracht werden. Andererseits kann eine bereits auf dem Kabel vorhandene Kennzeichnung KX als Kennung dienen, und diese der Ausgangslänge l0 zugeordnet werden.

Die Leitung L0 kann dann über ein erstes ihrer Enden an einen dafür vorgesehenen Anschluss, wie bspw. eine Kabelklemme, angeschlossen werden. Sodann kann die Leitung L0 derart abgelängt werden, dass die Leitung L0 über ein durch Ablängen entstandenes Ende an einen zweiten dafür vorgesehenen Anschluss angeschlossen wird. Dabei entstehen eine erste, überschüssige Leitung L1 und eine zweite Leitung L2, die in der elektrischen Montageanordnung, z.B. in einem Schaltschrank und/oder in einer Schaltschrankpartition, verbleibt bzw. zum Verbleib in der elektrischen Montageanordnung vorgesehen ist.

Wird zur Verkabelung der elektrischen Montageanordnung mehr als eine Leitung L0 benötigt, so fallen entsprechend mehrere Leitung L1, unter Umständen mit verschiedener Länge aufgrund der unterschiedlichen Entfernung zwischen den Anschlüssen die vermittels der jeweiligen Leitung zu verbinden sind.

Die Länge der ersten Leitung wird sodann in einem Schritt S3, bspw. vermittels einer Längenmesseinheit LE, bestimmt.

In einem Schritt S4 wird dann eine Kennung der ersten abgelängten elektrischen Leitung L1, bspw. vermittels einer Erkennungseinheit EE, bestimmt. Die angegebene Reihenfolge der Schritte S3, S4 ist dabei nicht zwingend erforderlich.

Die Länge I1 der ersten Leitung L1 kann zusammen mit der Kennung nun abgespeichert werden. Anschließend können die Länge und Kennung an die zentrale Datenbank und/oder ein Anlagenplanungs- oder -verwaltungstool, bspw. vermittels einer Kommunikationseinheit KE, übertragen werden. Dieser Vorgang kann für mehrere Leitungen die bei der Verkabelung anfallen wiederholt werden.

In einem Schritt S5 wird die Länge einer zweiten elektrischen Leitung, die zur Installation in einer elektrischen Montageanordnung bestimmt ist, anhand der Länge I1 der ersten abgelängten elektrischen Leitung L1 und einer vermittels der Kennung bestimmten Ausgangslänge l0 bestimmt. Dafür wird anhand der Kennung die Ausgangslänge der Leitung L0 bestimmt.

Durch die gemessene Länge der Leitung L1 kann durch Differenzbildung die Länge I2 bestimmt werden. Zusätzlich kann ein Offset verwendet werden um die Länge L2 weiterhin zu optimieren.

Anhand dieser Länge L2 können dann weitere elektrische Leitung hergestellt werden, die für die Verkabelung der elektrischen Montageanordnung erforderlich sind. Insbesondere können dadurch auf einfache Weise fertig konfektionierte elektrische Leitungen für die Verkabelung identischer elektrischer Montageanordnungen, z.B. Schaltschränken oder Schaltschrankpartitionen, hergestellt werden.

Vorgenannte Schritte können zumindest teilweise wiederholt werden um mehrere Leitungen zu konfektionieren und die entsprechenden Längen l0, l1 und/oder l2 zu ermitteln. Dadurch können die Leitungen eines Kabelbaums konfektioniert und deren jeweiligen Längen l0, l1 und/oder l2 erfasst werden. Dies ist besonders vorteilhaft beim Verkabeln eines Schaltschranks, insbesondere zum Herstellen von vorkonfektionierten Leitungen eines Kabelbaums und/oder zum Herstellen von Kleinserien von Leitungen bzw. Kabelbäumen.

Es ist allerdings auch möglich, einen Verdrahtungssatz mit vorkonfektionierten Leitungen zum Erstellen für zweite Schaltschränke zu nutzen, wobei die zweiten Schaltschränke nicht identisch bzw. baugleich zum ersten Schaltschrank sind.

Diese Variante wird nachfolgend näher beschrieben und kann als zusätzliche Option des erfindungsgemäßen Verfahrens realisiert werden:
In einem optionalen weiteren Schritt können die Bestückungsdaten vorzugsweise in Kombination einem schaltschrankspezifischer Plan oder eine schaltschrankspezifische Dokumentation z.B. mit einem vom Anlagenplanungstool erstellten Aufbauplan und/oder mit dem Schaltplan des ersten Schaltschrankes und/oder dem Schaltschranklayout ausgewertet werden. Diese Datensätze können durch ein sogenanntes M-CAD-Computersystem erstellt werden.

Der Aufbauplan und/oder der Schaltplan und/oder das Schaltschranklayout des ersten Schaltschranks kann mit einem Aufbauplan und/oder einem Schaltplan und/oder einem Schaltschranklayout des zweiten Schaltschrankes abgeglichen werden.

So ist es möglich, dass die Leitung aufgrund seiner Kennung, z.B. durch ein Computerprogramm, einer Schaltumgebung, z.B. einem Schaltschrank oder einer Anordnung mehrerer Schaltschränke oder einer Schaltschrankpartition, zuordenbar ist. Das Computerprogramm kann auf einem Datenspeicher der erfindungsgemäßen Vorrichtung zur Leitungslängenbestimmung abgelegt sein oder auf einem Datenspeicher auf einem aus der Vorrichtung ausgelagerten Rechner, an welchen die ermittelten Daten übertragen werden.

Die Schaltplanumgebung kann vorteilhaft mit einem Stromlaufplan kombiniert werden.

Weiterhin kann zusätzlich die Spannung überprüft werden und auf einem Stromlaufplan z.B. durch den externen Rechner oder durch die erfindungsgemäße Vorrichtung zugeordnet werden.

Die Kennung KX kann somit zur Identifikation der Leitung in einem Plan, insbesondere in einem Stromlaufplan, dienen.

Dies kann vorzugsweise durch eine Auswerteeinheit erfolgen die bevorzugt Teil der erfindungsgemäße Vorrichtung zur Leitungslängenbestimmung ist oder ebenfalls bevorzugt Teil eines Computer, welcher besonders bevorzugt eine Kommunikationsverbindung mit der Vorrichtung zur Leitungslängenbestimmung aufweist.

Die Auswerteeinheit kann dabei ein Rechenwerk, z.B. einen Komparator, und einen Datenspeicher aufweisen, auf welchem die entsprechenden zu vergleichenden Datensätze hinterlegt sind.

Die Bauteile bzw. Verdrahtungselemente welche identisch zum ersten Schaltschrank auch im zweiten Schaltschrank realisiert sind, können, beispielsweise durch die Vorrichtung oder den Computer, an den Hersteller zur Vorkonfektionierung des Verdrahtungssatzes übermittelt werden. Weiterhin wird eine Liste der Verdrahtungselemente übermittelt, welche im zweiten Schaltschrank im Vergleich gegenüber dem ersten Schaltschrank zusätzlich enthalten sind oder welche entfallen oder mit einer anderen Länge realisiert sind.

Der Hersteller liefert sodann die vorkonfektionierten Kabel aus gemeinsam mit den nicht-vorkonfektionierten Kabeln, zu welchen keine Längenangaben oder nur näherungsweise Längenangaben zur Einstellung einer Anfangslänge I0 übermittelt wurden.

Durch die teilweise vorkonfektionierten Kabel kann Material eingespart werden und das Transportgewicht des Verdrahtungssatzes bei der Auslieferung des Verdrahtungssatzes vorteilhaft reduziert werden. Zugleich kann sind die Vorteile auf Schaltschränke mit nicht-identischem Aufbau übertragbar. Durch die vorbeschriebene Verfahrensoption werden zudem M-Cad-Geometriedaten des Schaltschrankes, welche ohnehin im System vorliegen vorteilhaft für die Erstellung eines teilweise vorkonfektionierten Verdrahtungssatzes genutzt.

In einer bevorzugten Ausführungsvariante der vorliegenden Erfindung kann die Kennzeichnung KX sowohl eine Kennung der individuellen Leitung als auch eine Kennung eines Verdrahtungssatzes umfassen.

Die Kennung kann insbesondere die Kennzeichnung einer Anlage bzw. Industrieanlage, eines Ortes oder eines Projekts umfassen. Während die Anlage und der Ort in der Verdrahtungstechnik feststehende Begriffe sind, kann es sich im Fall eines Projekts um eine Schaltschrankpartition, einen vollständigen Schaltschrank oder mehrere Schaltschränke am Ort handeln. Der Verdrahtungssatz kann beispielsweise einem von mehreren Schaltschränken an einem Ort der Anlage zugeordnet werden.

Die Kennzeichnung der Anlage, des Orts und des Projekts kann mit einer Verbindungsliste verglichen werden, welcher als Datensatz auf der Vorrichtung zur Leitungslängenbestimmung und/oder auf einem externen Rechner hinterlegt sein kann. Die Kennzeichnung KX kann zusätzlich zur Kennung auch eine Ausgangslänge aufweisen. Allerdings kann die Ausgangslänge I0 der Leitung vor dem Ablängen auch auf einer Speichereinheit, z.B. auf der Vorrichtung zur Leitungslängen-bestimmung, oder auf dem externen Rechner hinterlegt sein, da einige Kennzeichnungsvarianten, beispielsweise der Barcode, nur begrenzten Speicherplatz aufweisen.

Diese eingangs anhand von Fig. 17 beschriebene Problemstellung lässt sich anhand der dargestellten Doppelbelegung grafisch dargestellen.

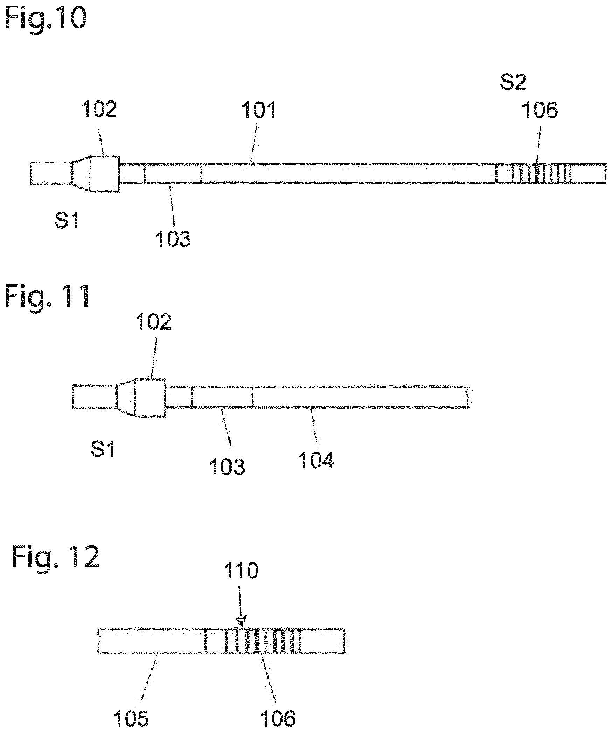

Die in Fig. 10 dargestellte teilweise vorkonfektionierte Leitung 101 ist nur auf einer ersten Seite S1 konfektioniert.

Dies bedeutet im konkreten Fall des Ausführungsbeispiels der Fig. 10 und Fig. 11, dass der Werker eine Leitung zur Verfügung gestellt bekommt, die beispielsweise bereits einseitig einen Leitungsverbinder 102 trägt und bereits zumindest einen oder mehrere erste Kennzeichnungsträger 103 aufweisen, die dem Werker die Information über die richtige Verbindungsstelle in der elektrischen Montageanordnung, insbesondere den Schaltschrank oder der Schaltschrankpartition, geben.

Dabei ist die Leitung 101 bereits im richtigen Typ (z.B. Kabelquerschnitt) und in richtiger Farbe ausgeführt.

Die Leitung 101 selbst ist etwas zu lang zugeschnitten, z.B. auf ein vorbestimmtes Metermaß, in welchem die Leitung 101 ausgeliefert wird. Die konkrete Einkürzung der Leitung 101 erfolgt am Ort der Montage der Leitung.

Die zweite Seite S2 trägt, wie aus Fig. 10 erkennbar, noch keinen Leitungsverbinder und keinen Kennzeichnungsträger, da sie noch abgelängt werden muss.

In dieser Weise erfolgt in einem ersten Verfahrensschritt a) das Bereitstellen der teilweise, insbesondere einseitig, vorkonfektionierten Leitung 101 durch Anlieferung an den Ort an welchem die zwei Anschlusspunkte der elektrischen Montageanordnung verdrahtet werden sollen.

Das Ablängen erfolgt unter Ausbildung einer ersten Leitung 105, dem Restabschnitt, welches meist nur als Abfallprodukt angesehen wird, und unter Ausbildung einer zweiten Leitung 104, welche nunmehr die exakte Länge zur Installation in der elektrischen Montageanordnung aufweist.

Dabei würde ein Leitungsverbinder im Fall einer vollständig konfektionierten Leitung auf der zweiten Seite von der zu installierenden zweiten Leitung getrennt und würde sich an dem Restabschnitt, also der ersten Leitung, befinden. Gleiches würde im überwiegenden Fall auch für den Kennzeichnungsträger zutreffen.

Allerdings weist die zweite Seite der Leitung aus Schritt a) eine Kennzeichnung 106 auf, die an oder auf der Leitung angeordnet ist. Diese Kennzeichnung 106 umfasst Informationen zur Erstellung eines zweiten Kennzeichnungsträgers 107 zur Kennung eines zweiten der zwei Anschlusspunkte. Die Kennzeichnung 106 kann als Code 110 ausgebildet sein, welcher die Leitung 101 selbst oder den anzubringenden Kennzeichnungsträger 107 identifiziert.

Dabei genügt ausschließlich eine Kennzeichnung pro Leitung. Eine durchgehende insbesondere äquidistante Kennzeichnung verbunden mit einem hohen Druckaufwand, ist dabei nicht notwendig.

Die Kennzeichnung 106 kann z.B. ein Wickeletikett mit einem Barcode oder QR-Code sein.

Diese Kennzeichnung 106 befindet sich nach dem Ablängen auf der ersten Leitung 105.

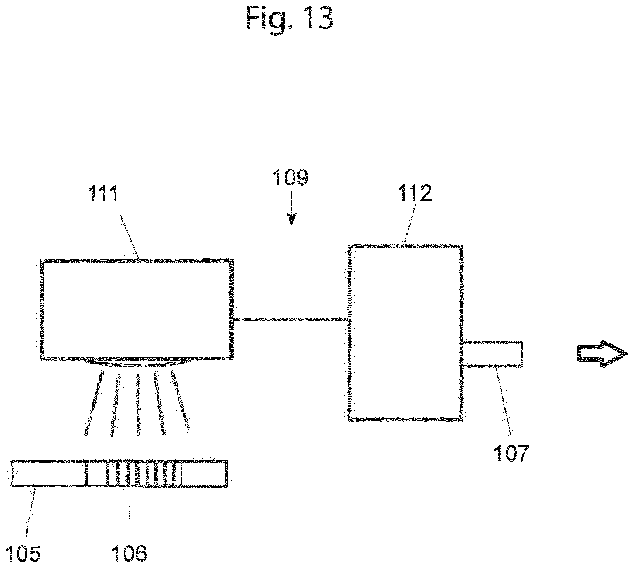

Anhand der Kennzeichnung kann ein Auslesen in einem Schritt c) durch eine Auslesevorrichtung 109, umfassend z.B. einen Scanner 111 und einen Drucker 112, und Erstellen des zweiten Kennzeichnungsträgers 107 zur Kennung des zweiten Anschlusspunkts in der elektrischen Montageanordnung erfolgen. Dies ist in Fig. 13 dargestellt.

Die Auslesevorrichtung kann z.B. als eine Station ausgebildet sein, bei der ein Scanner den Code liest und ein Drucker die benötigte Kennung auf einem Kennzeichnungsträger bereitstellt.

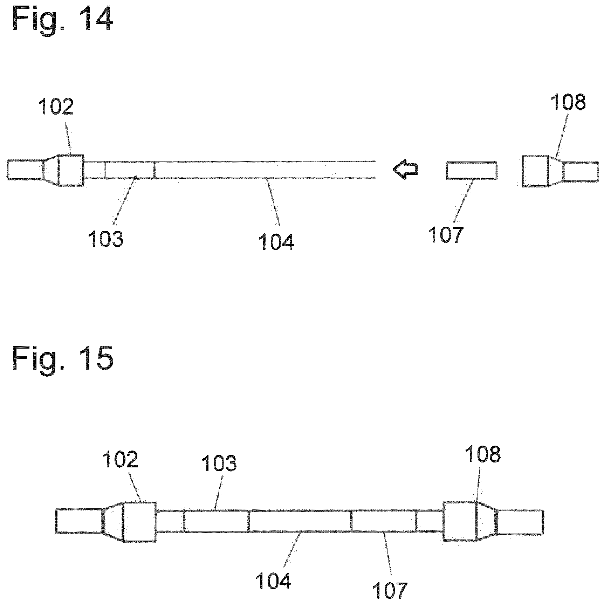

Der zweite Kennzeichnungsträger 107 wird auf die zweite Leitung 104 appliziert in einem Schritt d). Gleiches gilt für einen zweiten Leitungsverbinder 108. Dies ist schematisch in Fig. 14 dargestellt.

Schließlich kann die in Fig. 15 dargestellte vollständig konfektionierte Leitung 104 in der elektrischen Montageanordnung verbaut werden.

Das Verfahren kann somit zusätzlich das Problem der Zuordnung eines Kennzeichnungsträgers zu einer Leitung lösen, wenn die Leitung vor dem Verbau abgeschnitten werden muss und die zu verwendenden Kennzeichnungsträger nicht verschiebbar sind.

## Patentansprüche

1. Verfahren zur Bestimmung einer Länge (I2) einer teilweise vorkonfektionierten zweiten elektrischen Leitung (L2),
wobei die teilweise vorkonfektionierte zweite elektrische Leitung (L2) und eine erste elektrische Leitung (L1) mit einer Länge (11) und mit einer Kennzeichnung (KX) durch Ablängen einer teilweise vorkonfektionierten Leitung (L0) mit der Ausgangslänge (I0) und der Kennzeichnung (KX) hervorgehen,
wobei die Leitung (L0) teilweise vorkonfektioniert als Einzelleitung oder als mit mehreren weiteren teilweise vorkonfektionierten Leitungen als Kabelbündel zur Verkabelung einer Montageanordnung ausgebildet ist,
wobei anhand der Kennzeichnung (KX) ein Leitungstyp bestimmt wird,
wobei die Kennzeichnung (KX) Informationen zur Kennung der Anschlüsse elektrischer Geräte umfasst, an welche die zweite elektrische Leitung (L2) in der elektrischen Montageanordnung anzuschließen ist, und
wobei das Verfahren zumindest die folgenden Schritte umfasst:
a) Bestimmung (S3) der Länge (l1) der ersten elektrischen Leitung (L1)
durch eine Vorrichtung zur Leitungslängenbestimmung,
b) Bestimmung (S4) einer Kennung der ersten elektrischen Leitung (L1), durch Erkennung der Kennzeichnung (KX) der ersten elektrischen Leitung (L1)
c) Bestimmung (S5) der Länge (l2) der zweiten elektrischen Leitung, die zur Installation in einer elektrischen Montageanordnung bestimmt ist, anhand der Länge (11) der ersten elektrischen Leitung (L1) und der vermittels der Kennung bestimmten Ausgangslänge (l0).

2. Verfahren nach Anspruch 1, **dadurch gekennzeichnet, dass** anhand der Kennung die erste elektrische Leitung (L1) identifiziert wird und anhand dieser Identifizierung die Ausgangslänge (l0) bestimmt wird.

3. Verfahren nach einem der vorhergehenden Ansprüche 1 und/oder 2, **dadurch gekennzeichnet, dass** das Verfahren ferner einen oder mehrere der folgenden Schritte umfasst:
Ablängen (S1) wenigstens einer elektrischen Leitung (L) auf eine Ausgangslänge (l0), und/oder Zuordnen (S2) einer Kennung zu der Ausgangslänge (l0), und/oder Speichern der Ausgangslänge (l0) und einer zugeordneten Kennung.

4. Verfahren nach einem der vorhergehenden Ansprüche, **dadurch gekennzeichnet, dass** das Verfahren ferner den folgenden Schritt umfasst:
Kennzeichnen einer elektrischen Leitung (L, L0, L1, L2) mit einer der Kennung entsprechenden Kennzeichnung (KX), welche Kennzeichnung (KX) vorzugsweise an der Oberfläche, vorzugsweise auf der Oberfläche, der Leitung (L, L0, L1, L2) angebracht wird.

5. Verfahren nach einem der vorhergehenden Ansprüche, **dadurch gekennzeichnet, dass** das Verfahren ferner den folgenden Schritt umfasst:
Ablängen der elektrischen Leitung (L0) zur Verkabelung einer elektrischen Montageanordnung, wobei eine erste, überschüssige elektrische Leitung (L1) anfällt und wobei eine zweite, zur Verwendung in der elektrischen Montageanordnung bestimmte elektrische Leitung (L2) anfällt.

6. Verfahren nach Anspruch 4, **dadurch gekennzeichnet, dass** ferner zumindest einen der folgenden Schritte umfasst: Erfassen der Kennzeichnung (KX) der ersten Leitung (L1) oder der zweiten Leitung (L2), vorzugsweise vermittels einer Bilderkennung, und
Ermitteln einer Kennung anhand der erfassten Kennzeichnung (KX).

7. Verfahren zum Herstellen eines ersten Verdrahtungssatzes von elektrischen Leitungen, die jeweils mit wenigstens einer Kennzeichnung (KX) versehen sind, welchen Kennzeichnungen (KX), bspw. anhand einer vermittels der Kennzeichnung (KX) ermittelbaren Kennung, jeweils eine Ausgangslänge (l0) zuordenbar ist und Durchführen eines Verfahrens nach einem der vorhergehenden Schritte für jede der elektrischen Leitungen des Verdrahtungssatzes.

8. Verfahren zur Herstellung eines zweiten Satzes von elektrischen Leitungen wobei der erste Verdrahtungssatz von elektrischen Leitungen nach einem Verfahren nach Anspruch 7 hergestellt wird und wobei der erste Verdrahtungssatz für einen ersten Schaltschrank und der zweite Satz für einen zweiten Schaltschrank bestimmt sind, **dadurch gekennzeichnet, dass** bei der Herstellung des zweiten Verdrahtungssatzes ein schaltschrankspezifischer Plan und/oder eine schaltschrankspezifische Dokumentation des ersten Schaltschranks mit einem schaltschrankspezifischen Plan und/oder einer schaltschrankspezifischen Dokumentation des zweiten Schaltschrankes verglichen werden und die Leitungen des zweiten Verdrahtungssatzes, welche sowohl im ersten als auch im zweiten Schaltschrank identisch realisiert sind, vorkonfektioniert werden.

9. Verfahren nach Anspruch 8, **dadurch gekennzeichnet, dass** die Leitungen, welche nicht identisch realisiert sind, im zweiten Verdrahtungssatz mit einer Ausgangslänge (10) enthalten sind oder entfallen.

10. Vorrichtung (V1) zur Leitungslängenbestimmung, umfassend: eine Erkennungseinheit (EE), die dazu dient, eine Kennung einer ersten elektrischen Leitung (L1) zu bestimmen, welche als Kennzeichnung an der Oberfläche oder auf der Oberfläche der Leitung (L1) angebracht ist, wobei durch die Kennung der Leitungstyp der Leitung bestimmbar ist, wobei der Leitungstyp Informationen zu einer oder mehreren Anschlussbezeichnungen, an die die Enden einer zweiten Leitung angeschlossen werden sollen, umfasst, eine Längenmesseinheit (LE), die dazu dient, eine Länge (11) der ersten Leitung (L1) zu bestimmen, sowie eine Speichereinheit (SE), die operativ mit der Erkennungseinheit (EE) und der Längenmesseinheit (LE) verbunden ist, und die dazu dient, die Kennung und die Länge (11) der ersten Leitung (L1) zu erfassen, insbesondere einander zuzuordnen, wobei eine Detektionseinheit (DE1) umfasst die dazu dient, das Einführen der ersten Leitung in die Vorrichtung, insbesondere den Startpunkt der Längenmessung, zu bestimmen und wobei die Vorrichtung eine zweite Detektionseinheit (DE2) zur Detektion eines Leitungsendes aufweist.

11. Vorrichtung (V1) zur Leitungslängenbestimmung nach Anspruch 10, **dadurch gekennzeichnet, dass** die Vorrichtung eine Leitungsfördereinheit (TE) zum Transport von Leitungen mit unterschiedlichen Leiterdurchmessern aufweist, wobei die Leitungsfördereinheit (TE) Laufbahnen (220, 230) mit unterschiedlicher Rillentiefe und/oder Rillenbreite aufweist, wobei die Zuleitung der Leitung auf die jeweilige Laufbahn in Abhängigkeit von einem ermittelten Leiterdurchmesser und/oder einer davon abhängigen Größe, insbesondere dem Leiterquerschnitt, erfolgt.

## Claims

1. A method for determining a length (I2) of a partially prefabricated second electrical line (L2), wherein the partially prefabricated second electrical line 5 (L2) and a first electrical line (L1) having a length (11) and having a marking (KX) by cutting to length a partially prefabricated line (L0) having the initial length (l0) and the marking (KX), wherein the line (L0) is partially prefabricated as a single line or as a line combined with 10 several further partially prefabricated lines as a cable bundle for the cabling of a mounting arrangement, wherein a line type is determined on the basis of the marking (KX), wherein the identification (KX) comprises information for the identification of the terminals of electrical devices to which the second electrical line (L2) is to be connected in 15 of the electrical mounting arrangement is to be connected, and
wherein the method comprising at least the following steps:
a) determining (S3) the length (11) of the first electrical line (L1) by a device for determining the line length,
b) determining (S4) an identifier of the first electrical line (L1) by detecting the marking (KX) of the first electrical line (L1),
c) determining (S5) the length (l2) of the second electrical line, which is intended for installation in electrical installation assembly, on the basis of the length (l1) of the first electrical line (L1) and the starting length (l0) determined by means of the identifier.

2. The method according to Claim 1, **characterized in that** the first electrical line (L1) is identified on the basis of the identifier and the starting length (l0) is determined on the basis of this identification.

3. The method according to one of preceding Claims 1 and/or 2, **characterized in that** the method furthermore comprises one or more of the following steps:
cutting to length (S1) at least one electrical line (L) to a starting length (l0),
and/or associating (S2) an identifier with the starting length (l0), and/or
storing the starting length (l0) and an associated identifier.

4. The method according to any one of the preceding claims, **characterized in that** the method furthermore comprises the following step:
identifying an electrical line (L, L0, L1, L2) using an identification (KX) corresponding to the identifier, which identification (KX) is preferably applied to the surface, preferably on the surface, of the line (L, L0, L1, L2).

5. The method according to any one of the preceding claims, **characterized in that** the method furthermore comprises the following step:
cutting to length the electrical line (L0) for wiring an electrical installation assembly, wherein a first, excess electrical line (L1) results and wherein a second electrical line (L2) intended for use in the electrical installation assembly results.

6. The method according to claim 4, **characterized in that** furthermore it comprises at least one of the following steps: acquiring the identification (KX) of the first line (L1) or the second line (L2), preferably by means of an image recognition unit, and ascertaining an identifier on the basis of the acquired identification (KX).

7. A method for producing a first wiring set of electrical lines, which are each provided with at least one identification (KX), which identifications (KX) can each be associated with a starting length (l0), for example, on the basis of an identifier ascertainable by means of the identification (KX), and carrying out a method according to any one of the preceding steps for each of the electrical lines of the wiring set.

8. A method for producing a second set of electrical lines, wherein the first wiring set of electrical lines is produced according to a method according to Claim 7 and wherein the first wiring set is intended for a first control cabinet and the second set is intended for a second control cabinet, **characterized in that** during the production of the second wiring set, a control-cabinet-specific plan and/or a control-cabinet-specific documentation of the first control cabinet is compared to a control-cabinet-specific plan and/or a control-cabinet-specific documentation of the second control cabinet and the lines of the second wiring set, which are implemented identically in both the first and also in the second control cabinet, are preconfigured.

9. The method according to Claim 8, **characterized in that** the lines, which are not identically implemented, are contained in the second wiring set having a starting length (l0) or are omitted

10. A device (V1) for determining the length of a line, comprising: a recognition unit (EE) which is used to determine an identifier of a first electrical line (L1), wherein the line type of the line is determinable by the identifier, the line type comprising information on one or more terminal designations to which the ends of a second line are to be connected, a length measuring unit (LE), which is used to determine a length (11) of the first line (L1), and a storage unit (SE), which is operatively connected to the recognition unit (EE) and the length measuring unit (LE) and is used to acquire the identifier and the length (11) of the first line (L1), in particular to associate them with one another, wherein it comprises a detection unit (DE1), which is used to determine the insertion of the first line into the device, in particular the starting point of the length measurement and wherein the device comprises a second detection unit (DE2) for detecting a line end.

11. A device (V1) for determining the length of a line according to claim 10, **characterized in that** the device comprises a line conveyor unit (TE) for the transportation of lines having different conductor diameters, wherein the line conveyor unit (TE) comprises runways (220, 230) having different groove depths and/or groove widths, wherein the supply of the line on the respective runway is performed in dependence on an ascertained conductor diameter and/or a variable dependent thereon, in particular the conductor cross section.

## Revendications

1. Procédé pour déterminer une longueur (I2) d'une deuxième ligne électrique (L2) partiellement préparée, dans lequel la deuxième ligne électrique (L2) partiellement préparée et une première ligne électrique (L1) ayant une longueur (11) et un marquage (KX) sont obtenues par recoupe d'une ligne partiellement préparée (L0) ayant la longueur initiale (I0) et le marquage (KX),
dans lequel la ligne (L0) partiellement préparée est conformée comme une ligne unique ou comme un faisceau de câbles avec plusieurs autres lignes partiellement préparées pour le câblage d'une disposition de montage,
dans lequel le marquage (KX) détermine un type de ligne, le marquage (KX) contenant des informations sur les branchements d'appareillages électriques auxquels la deuxième ligne électrique (L2) doit être raccordée dans la disposition de montage électrique, et
dans lequel le procédé comprend au moins les étapes suivantes :
a) détermination (S3) de la longueur (11) de la première ligne électrique (L1) par un dispositif pour la détermination de la longueur des lignes,
b) détermination (S4) d'un identifiant de la première ligne électrique (L1) par la reconnaissance du marquage (KX) de la première ligne électrique (L1),
c) détermination (S5) de la longueur (I2) de la deuxième ligne électrique destinée à être installée dans une disposition de montage électrique, à l'aide de la longueur (11) de la première ligne électrique (L1) et de la longueur initiale (I0) déterminée à l'aide de l'identifiant.

2. Procédé selon la revendication 1, **caractérisé en ce que** l'identifiant permet d'identifier la première ligne électrique (L1) et la longueur initiale (I0) est déterminée à partir de cette détermination.

3. Procédé selon l'une des revendications 1 et/ou 2, **caractérisé en ce qu'**il comprend en outre une ou plusieurs des étapes suivantes :
recoupe (S1) d'au moins une ligne électrique (L) à une longueur initiale (l0) et/ou affectation (S2) d'un identifiant à la longueur initiale (l0) et/ou enregistrement de la longueur initiale (I0) et d'un identifiant associé.

4. Procédé selon l'une des revendications précédentes, **caractérisé en ce qu'**il comprend en outre l'étape suivante :
marquage d'une ligne électrique (L, La, L1, L2) avec un marquage (KX) correspondant à l'identifiant, lequel marquage (KX), est de préférence apposé à la surface, de préférence sur la surface, de la ligne (L, La, L1, L2).

5. Procédé selon l'une des revendications précédentes, **caractérisé en ce qu'**il comprend en outre l'étape suivante :
recoupe de la ligne électrique (L0) pour le câblage d'une disposition de montage électrique, qui donne une première ligne électrique (L1) en excédent et une deuxième ligne électrique (L2) destinée à être utilisée dans la disposition de montage électrique.

6. Procédé selon la revendication 4, **caractérisé en ce qu'**il comprend en outre au moins une des étapes suivantes :
saisie du marquage (KX) de la première ligne (L1) ou de la deuxième ligne (L2), de préférence au moyen d'une reconnaissance d'image, et détermination d'un identifiant à l'aide du marquage (KX) saisi.

7. Procédé pour la fabrication d'un premier jeu de câblage composé de lignes électriques munies chacune d'au moins un marquage (KX), chacun de ces marquages (KX) pouvant être affecté à une longueur initiale (I0), par exemple à l'aide d'un identifiant qui peut être déterminé au moyen du marquage (KX), et exécution d'un procédé selon l'une des revendications précédentes pour chacune des lignes électriques du jeu de câblage.

8. Procédé pour la fabrication d'un deuxième jeu de lignes électriques, dans lequel le premier jeu de câblage composé de lignes électriques est fabriqué par un procédé selon la revendication 7 et dans lequel le premier jeu de câblage est destiné à une première armoire électrique et le deuxième jeu à une deuxième armoire électrique, **caractérisé en ce que**, lors de la fabrication du deuxième jeu de câblage, un plan spécifique de l'armoire électrique et/ou une documentation spécifique de l'armoire électrique pour la première armoire électrique sont comparés à un plan spécifique de l'armoire électrique et/ou à une documentation spécifique de l'armoire électrique pour la deuxième armoire électrique et les lignes du deuxième jeu de câblage qui sont réalisées à l'identique dans la première et la deuxième armoire électrique sont préparées.

9. Procédé selon la revendication 8, **caractérisé en ce que** les lignes qui ne sont pas réalisées à l'identique sont présentes dans le deuxième jeu de câblage avec une longueur initiale (l0) ou sont omises.

10. Dispositif (V1) pour la détermination de la longueur de lignes, comprenant : une unité de reconnaissance (EE) qui sert à déterminer un identifiant d'une première ligne électrique (L1) apposé sous la forme d'un marquage à la surface ou sur la surface de la ligne (L1), lequel identifiant permet de déterminer le type de ligne de la ligne, le type de ligne contenant des informations sur une ou plusieurs désignations de branchements auxquels les extrémités d'une deuxième ligne doivent être raccordées, une unité de mesure de la longueur (LE) servant à déterminer une longueur (11) de la première ligne (L1), ainsi qu'une unité de mémoire (SE) en liaison opérationnelle avec l'unité de reconnaissance (EE) et l'unité de mesure de la longueur (LE), qui sert à saisir l'identifiant et la longueur (11) de la première ligne (L1), en particulier à les associer l'un à l'autre, le dispositif comprenant une unité de détection (DE1) qui sert à déterminer l'insertion de la première ligne dans le dispositif, en particulier le point où débute la mesure de la longueur, et le dispositif comprenant une deuxième unité de détection (DE2) pour la détection d'une fin de la ligne.

11. Dispositif (V1) pour la détermination de la longueur de lignes selon la revendication 10, **caractérisé en ce que** le dispositif comprend une unité d'acheminement de lignes (TE) pour le transport de lignes ayant des diamètres de conducteurs différents, laquelle unité d'acheminement de lignes (TE) présente des pistes (220, 230) ayant une profondeur de rainure et/ou une largeur de rainure différentes, chaque ligne étant amenée à la piste correspondante en fonction d'un diamètre de conducteur déterminé et/ou d'une grandeur dépendant de celui-ci, en particulier de la section du conducteur.
